# EUROPEAN PATENT SPECIFICATION

(11) **EP 3 779 531 B1**
(45) Date of publication and mention of the grant of the patent: **20.03.2024**
(21) Application number: 19785020.9
(22) Date of filing: 08.04.2019
(51) Int. Cl.: G02B 5/23, C09J 11/06, C09J 175/04, C08G 18/48, G02B 1/10, C08G 18/28, C08G 18/73, C08G 18/44, C08G 18/38, C08G 18/42, C08G 18/75, C08G 83/00, C08J 5/12, G02B 1/04, B32B 27/40, C08G 18/66

(54) **PHOTOCHROMIC OPTICAL ARTICLE AND METHOD FOR MANUFACTURING SAME**
FOTOCHROMER OPTISCHER GEGENSTAND UND VERFAHREN ZU SEINER HERSTELLUNG
ARTICLE OPTIQUE PHOTOCHROMIQUE ET SON PROCÉDÉ DE FABRICATION

(30) Priority: 12.04.2018 JP 2018077154
(43) Date of publication of application: 17.02.2021
(73) Proprietor: Tokuyama Corporation, Shunan-shi, Yamaguchi 745-8648 (JP)
(72) Inventor: MORI, Katsuhiro, Shunan-shi, Yamaguchi 745-8648 (JP); MOMODA, Junji, Shunan-shi, Yamaguchi 745-8648 (JP)
(74) Representative: Papula Oy
(86) International application number: PCT/JP2019/015319
(87) International publication number: WO 2019/198664

(56) References cited:
- WO-A1-2015/068798
- WO-A1-2016/143910
- WO-A1-2017/038865
- JP-A- H0 419 650
- US-A1- 2007 122 626
- US-A1- 2013 215 488
- DATABASE WPI Week 201680 Thomson Scientific, London, GB; AN 2016-706985 XP002804723, & JP 2016 194026 A (TOKUYAMA CORP) 17 November 2016 (2016-11-17)

## Description

### TECHNICAL FIELD

The present invention relates to a photochromic optical article in which a pair of optical article plates each comprising a glass material are bonded together through a photochromic adhesive layer, and to a method for manufacturing thereof.

### BACKGROUND ART

In recent years, in particular, in the U.S., photochromic sunglasses in which photochromic properties are provided to sunglasses having anti-glare properties have been rapidly gaining popularity. In the photochromic sunglasses described above, the transmittance of a lens is changed according to the ambient brightness (the amount of ultraviolet light), and thus the anti-glare properties can be adjusted.

As methods for manufacturing the photochromic sunglasses as described above, for example, a method in which a photochromic polymerizable composition obtained by mixing a photochromic compound in a polymerizable composition is molded in the shape of a lens; a method in which a photochromic polymerizable composition is used as an adhesive and in which thus a pair of lenses are bonded together; are known (see, for example, Patent Documents 1 to 4).
Patent Document 1: PCT International Publication No. WO2014/136804
Patent Document 2: Japanese Unexamined Patent Application, Publication No. 2007-138186
Patent Document 3: Japanese Unexamined Patent Application, Publication No. 2012-052091
Patent Document 4: Japanese Unexamined Patent Application, Publication No. H01-033154

US2013215488 discloses a photochromic composition, which can function as an adhesive layer for bonding optical sheets made from a polycarbonate resin. The composition may include a polyurethane-urea resin (A) obtained by reacting a polyol compound (A1), a polyisocyante compound (A2) that has two or more isocyanato groups in the molecule, and an amino-containing compound (A3) that contains two or more isocyanato-reactive groups in the molecule, with at least one of the isocyanato-reactive groups being an amino group; and a photochromic compound (B).

### DISCLOSURE OF THE INVENTION

### Problems to be Solved by the Invention

However, in the manufacturing method in which the photochromic polymerizable composition is molded in the shape of a lens, the durability of the photochromic sunglasses obtained is not sufficient, and when the photochromic sunglasses are used under an environment in which they are exposed to sunlight for a long period of time, the photochromic properties are easily degraded.

On the other hand, in the manufacturing method in which the photochromic polymerizable composition is used as an adhesive and in which thus a pair of lenses are bonded together, as compared with the manufacturing method in which the photochromic polymerizable composition is molded in the shape of a lens, the durability of the photochromic sunglasses can be improved. However, it is found from the examination of the present inventors that in this manufacturing method, there is room for improvement in terms of high photochromic properties and high adhesion required in recent years.

The present invention is made in view of the conventional conditions as described above, and an object thereof is to provide a photochromic optical article which has excellent adhesion between a pair of optical article plates each comprising a glass material, and which can achieve excellent photochromic properties and a method for manufacturing such a photochromic optical article.

### Means for Solving the Problems

In order to solve the problems described above, the present inventors have conducted a thorough study on the composition of a photochromic polymerizable composition. Consequently, the present inventors have found that the problems described above can be solved when a specific monomer is used for a photochromic polymerizable composition, and thereby have completed the present invention.

Specifically, a photochromic optical article according to the present invention is a photochromic optical article which is formed by bonding together a pair of optical article plates each comprising a glass material with an adhesive layer that includes a photochromic compound (A) and a urethane resin (B), and the urethane resin (B) is a resin obtained by polymerizing: a polyiso(thio)cyanate compound (B1) having two or more iso(thio)cyanate groups within a molecule; a poly(thi)ol compound (B2) having, within a molecule, two or more active hydrogen-containing groups selected from a hydroxy group and a thiol group; and a mono(thi)ol compound (B3) having, within a molecule, one active hydrogen-containing group selected from a hydroxy group and a thiol group, according to claim 1.

A method for manufacturing the photochromic optical article according to the present invention is a method that includes:
applying a photochromic polymerizable composition on an optical article plate comprising a glass material, in which the photochromic polymerizable composition containing: the photochromic compound (A); the polyiso(thio)cyanate compound (B1) having two or more iso(thio)cyanate groups within the molecule; the poly(thi)ol compound (B2) having, within the molecule, two or more active hydrogen-containing groups selected from a hydroxy group and a thiol group; and the mono(thi)ol compound (B3) having, within the molecule, one active hydrogen-containing group selected from a hydroxy group and a thiol group,
overlaying the other optical article plate on the photochromic polymerizable composition, and
polymerizing the photochromic polymerizable composition, according to claim 11.

### Effects of the Invention

According to the present invention, it is possible to provide a photochromic optical article which has excellent adhesion between a pair of optical article plates each comprising a glass material, and which can achieve excellent photochromic properties and a method for manufacturing such a photochromic optical article. Since an adhesive layer in the photochromic optical article according to the present invention has excellent adhesion and can achieve excellent photochromic properties, it is possible to relatively reduce the thickness of the adhesive layer. Consequently, it is possible to reduce resin components and further enhance the durability thereof.

### BRIEF DESCRIPTION OF THE DRAWINGS

Fig. 1 is a cross-sectional view showing one form of a photochromic optical article according to the present embodiment.
Fig. 2 is a schematic view showing the molecular structure of a polyrotaxane monomer.

### PREFERRED MODE FOR CARRYING OUT THE INVENTION <Photochromic optical article>

A photochromic optical article according to the present embodiment is formed by bonding together a pair of optical (TKUF-021) article plates each comprising a glass material with an adhesive layer that includes a photochromic compound (A) and a urethane resin (B). The adhesive layer can be formed, for example, by polymerizing a photochromic polymerizable composition which will be described later.

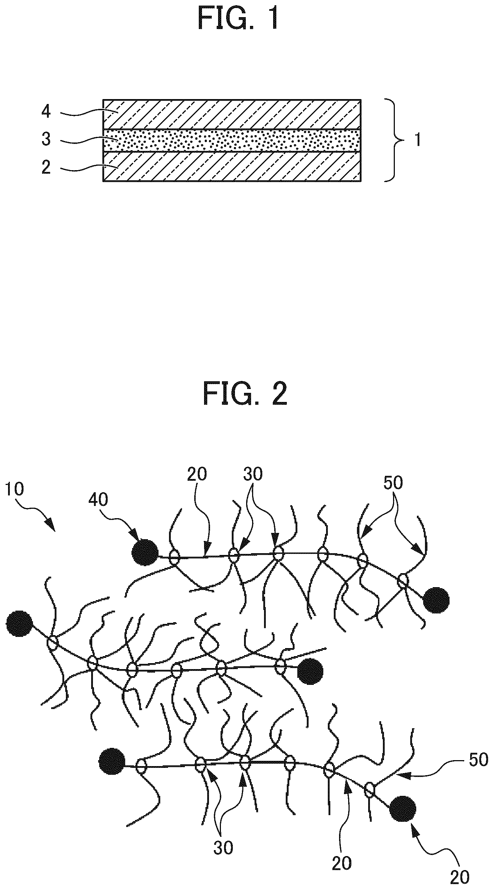

One form of the photochromic optical article according to the present embodiment is shown in Fig. 1. The photochromic optical article 1 shown in Fig. 1 has a structure in which an optical article plate 2 and an optical article plate 4 are bonded together through an adhesive layer 3. Fig. 1 is a schematic view, and thus the shape of the photochromic optical article according to the present embodiment is not limited to this example. The configuration of the photochromic optical article according to the present embodiment will be described in detail below.

### [Optical article plate]

The material of the optical article plate is not particularly limited as long as it is used in an optical lens, and the material may be an inorganic material comprising glass material.

Examples of the inorganic material comprising glass material include general-purpose glass materials such as soda glass, flint glass and crown glass. Among these glass materials, crown glass is preferable. The glass material may be a glass material which is chemically reinforced or may be a glass material which has UV absorption properties. Although the refractive index of the glass material is not particularly limited, the refractive index is preferably 1.5 to 2.1 and more preferably 1.5 to 1.9.

The urethane resin (B) which will be described later has very excellent adhesion to the optical article plate formed of an inorganic material comprising glass material. Since an inorganic material is excellent in gas barrier properties as compared with an organic material, it is possible to reduce the photo-oxidation degradation of the photochromic compound. Hence, the photochromic optical article according to the present embodiment achieves particularly excellent effects when the optical article plate formed of an inorganic material comprising glass material is used.

The optical article plates are used as a pair, and when the photochromic optical article according to the present embodiment is used as an eyeglass lens, the optical article plate comprising a glass material on a side (inner side) close to an eye and the optical article plate comprising a glass material on a side (outer side) which is far from the eye and to which more sunlight is applied outdoors are combined together.

When the material of the optical article plate is a glass material, in order to sufficiently achieve photochromic properties, a glass material which has low UV absorption properties is preferably used for the optical article plate on the outer side. Specifically, a glass material in which the transmittance of light having a wavelength of 380 nm is equal to or greater than 50% is preferably used. In terms of impact resistance, a glass material which is chemically reinforced may be used for the optical article plate on the outer side.

On the other hand, in order to protect the eye from ultraviolet light, a glass material which has high UV absorption properties is preferably used for the optical article plate on the inner side. Specifically, a glass material in which the transmittance of light having a wavelength of 400 nm is equal to or less than 10% is preferably used. In particularly, when the photochromic optical article according to the present embodiment is an eyeglass lens for frequency correction, in terms of reduction in the thickness and the weight of the photochromic optical article, a glass material in which the refractive index is equal to or greater than 1.6 is preferably used for the optical article plate on the inner side.

The thickness of the optical article plate is not particularly limited. When non-prescription sunglasses are produced, the optical article plate whose thickness is equal to or less than 1.5 mm can be used, and in terms of reduction in the weight, the optical article plate whose thickness is equal to or less than 1.0 mm is preferably used. When a prescription lens for myopia is produced, for example, it is preferable that the thickness of the center of the optical article plate on the outer side be equal to or less than 1.0 mm and that the thickness of at least part of the optical article plate on the inner side be greater than 1.0 mm, and the optical article plate which has an appropriate thickness of about 10 to 20 mm can also be used. When a prescription lens for hyperopia is produced, for example, it is preferable that the thickness of the center of the optical article plate on the outer side be equal to or less than 20 mm and that the thickness of at least part of the optical article plate on the inner side be greater than 1.0 mm, and the optical article plate which has an appropriate thickness of about 10 to 20 mm can also be used. Even when a bifocal lens, a progressive lens is produced, the thickness of the optical article plate which is used can be selected as necessary in the same manner as described above. When a prescription lens is produced, the concave side of the optical article plate on the inner side is ground as necessary, and thus it is possible to adjust the frequency according to the eyesight of a user.

In particular, the photochromic optical article according to the present embodiment achieves excellent effects when the thickness of at least one of the optical article plates is equal to or less than 1.5 mm and particularly equal to or less than 1.0 mm. The lower limit of the thickness of the optical article plate is, for example, 0.1 mm. In the photochromic optical article according to the present embodiment, the thickness of at least one of the optical article plates is preferably 0.1 to 1.5 mm, and more preferably 0.5 to 1.0 mm. When the thickness of one of the optical article plates is 0.1 to 1.5 mm, the other optical article plate may have the same thickness or may have a different thickness, and when the other optical article plate has a different thickness, the thickness thereof is not limited, and may be 10 to 20 mm.

The shape of the optical article plate is not particularly limited, and the optical article plate which has a shape (such as the shape of a flat surface or the shape of a curved surface) corresponding to a desired application is preferably used.

### [Photochromic compound (A)]

As the photochromic compound (A) (hereinafter also simply referred to as "the component (A)"), for example, a frugide compound, a chromene compound, a spirooxazine compound are known, and in the present embodiment, these photochromic compounds can be used without any limitation. Among these compounds, one type may be used singly or two or more types may be used together. Examples of the frugide compound, the chromene compound and the spirooxazine compound include compounds described in Japanese Unexamined Patent Application, Publication No. H2-28154, Japanese Unexamined Patent Application, Publication No. S62-288830, PCT International Publication No. WO94/22850 and PCT International Publication No. WO96/14596.

Compounds which indicate excellent photochromic action and which are newly found by the present inventors, for example, compounds disclosed in Patent Documents below can be preferably used: Japanese Unexamined Patent Application, Publication No. 2001-114775, Japanese Unexamined Patent Application, Publication No. 2001-031670, Japanese Unexamined Patent Application, Publication No. 2001-011067, Japanese Unexamined Patent Application, Publication No. 2001-011066, Japanese Unexamined Patent Application, Publication No. 2000-347346, Japanese Unexamined Patent Application, Publication No. 2000-344762, Japanese Unexamined Patent Application, Publication No. 2000-344761, Japanese Unexamined Patent Application, Publication No. 2000-327676, Japanese Unexamined Patent Application, Publication No. 2000-327675, Japanese Unexamined Patent Application, Publication No. 2000-256347, Japanese Unexamined Patent Application, Publication No. 2000-229976, Japanese Unexamined Patent Application, Publication No. 2000-229975, Japanese Unexamined Patent Application, Publication No. 2000-229974, Japanese Unexamined Patent Application, Publication No. 2000-229973, Japanese Unexamined Patent Application, Publication No. 2000-229972, Japanese Unexamined Patent Application, Publication No. 2000-219687, Japanese Unexamined Patent Application, Publication No. 2000-219686, Japanese Unexamined Patent Application, Publication No. 2000-219685, Japanese Unexamined Patent Application, Publication No. H11-322739, Japanese Unexamined Patent Application, Publication No. H11-286484, Japanese Unexamined Patent Application, Publication No. H11-279171, Japanese Unexamined Patent Application, Publication No. H10-298176, Japanese Unexamined Patent Application, Publication No. H09-218301, Japanese Unexamined Patent Application, Publication No. H09-124645, Japanese Unexamined Patent Application, Publication No. H08-295690, Japanese Unexamined Patent Application, Publication No. H08-176139, Japanese Unexamined Patent Application, Publication No. H08-157467, Specification of US. Patent No. 5645767, Specification of US. Patent No. 5658501, Specification of US. Patent No. 5961892, Specification of US. Patent No. 6296785, Japanese Patent No. 4424981, Japanese Patent No. 4424962, PCT International Publication No. WO2009/136668, PCT International Publication No. WO2008/023828, Japanese Patent No. 4369754, Japanese Patent No. 4301621, Japanese Patent No. 4256985, PCT International Publication No. WO2007/086532, Japanese Unexamined Patent Application, Publication No. 2009-120536, Japanese Unexamined Patent Application, Publication No. 2009-67754, Japanese Unexamined Patent Application, Publication No. 2009-67680, Japanese Unexamined Patent Application, Publication No. 2009-57300, Japanese Patent No. 4195615, Japanese Patent No. 4158881, Japanese Patent No. 4157245, Japanese Patent No. 4157239, Japanese Patent No. 4157227, Japanese Patent No. 4118458, Japanese Unexamined Patent Application, Publication No. 2008-74832, Japanese Patent No. 3982770, Japanese Patent No. 3801386, PCT International Publication No. WO2005/028465, PCT International Publication No. WO2003/042203, Japanese Unexamined Patent Application, Publication No. 2005-289812, Japanese Unexamined Patent Application, Publication No. 2005-289870, Japanese Unexamined Patent Application, Publication No. 2005-112772, Japanese Patent No. 3522189, PCT International Publication No. WO2002/090342, Japanese Patent No. 3471073, Japanese Unexamined Patent Application, Publication No. 2003-277381, PCT International Publication No. WO2001/060811, PCT International Publication No. WO2000/071544, PCT International Publication No. WO2005/028465, PCT International Publication No. WO2011/16582, PCT International Publication No. WO2011/034202, PCT International Publication No. WO2012/121414, PCT International Publication No. WO2013/042800 and Japanese Patent No. 6031035.

Among these components (A), in terms of photochromic properties such as a color optical density, initial coloring, durability and a color degradation speed, one or more types of chromene compounds having an indeno[2,1-f]naphtho[1,2-b] pyran skeleton are preferably used. Among these chromene compounds, compounds having a molecular weight of 540 or greater are preferable because they are particularly excellent in the color optical density and the color degradation speed.

As the component (A), from among compounds which have groups of long chains having a molecular weight of 300 or greater, in particular, substituents of molecular chains such as a polysiloxane chain, a polyoxyalkylene chain, a polyester chain and a polyester polyether chain, an arbitrary compound can be selected as necessary so as to be used. Since a molecular chain having a molecular weight of 300 or greater has a high molecular weight, when the photochromic compound is manufactured, it is likely that not one type of molecular chain but a plurality of types of molecular chains are included. In such a case, as the molecular weight of the molecular chain described above, the average value (number average molecular weight) of a plurality of types preferably falls within the specified range described above. This molecular weight can be confirmed with the type of raw material when the photochromic compound is manufactured or can be confirmed from a product by a known means such as NMR, IR or mass analysis.

It is considered that the photochromic compound has a molecular chain having a molecular weight of 300 or greater, and that thus even in the urethane resin (B), high photochromic properties can be achieved. With consideration given to the photochromic properties, the amount of photochromic compound mixed and the productivity of the photochromic compound itself, the molecular weight of the molecular chain described above is preferably 300 to 25000, more preferably 400 to 20000, further preferably 440 to 15000 and particularly preferably 500 to 10000.

When the photochromic compound has a molecular chain having a molecular weight of 300 or greater, the number of molecular chains described above is preferably 0.5 or greater with respect to one molecule of the photochromic compound. In other words, even when the number of molecular chains described above is the lowest, a structure in which two photochromic compounds are bonded together with the molecular chain is preferably provided. With consideration given to a good balance with the molecular weight of the molecular chain, the photochromic properties, the upper limit of the number of molecular chains is preferably four or less, more preferably two or less and further preferably one.

The photochromic compound is preferable in which in the molecular structure that achieves the photochromic properties, part of the molecule is cleaved by the application of light so as to produce color, and in which the cleaved part is rejoined so as to degrade the color. Hence, in order for the photochromic compound to reversibly repeat color production and color degradation, the existence of a free space in which the movement of the molecule is not prevented when cleaving and rejoining occur (flexibility of the molecule) is important. It is considered that in the case of the compound having the molecular structure as described above, in particular, the effect of the molecular chain described above is achieved.

Examples of the photochromic compound which has a molecular chain having a molecular weight of 300 or greater include compounds disclosed in PCT International Publication No. WO2000/015630, PCT International Publication No. WO2004/041961, PCT International Publication No. WO2005/105874, PCT International Publication No. WO2005/105875, PCT International Publication No. WO2006/022825, PCT International Publication No. WO2009/146509, PCT International Publication No. WO2010/20770, PCT International Publication No. WO2012/121414, PCT International Publication No. WO2012/149599, PCT International Publication No. WO2012/162725, PCT International Publication No. WO2012/176918, PCT International Publication No. WO2013/078086, PCT International Publication No. WO2019/013249, Japanese Patent Application No. 2018-079303, Japanese Patent Application No. 2018-136374.

For example, with respect to 100 parts by mass of the urethane resin (B), the mixing ratio of the component (A) is preferably set to 0.01 to 10 parts by mass, more preferably set to 0.05 to 5 parts by mass and further preferably set to 0.1 to 3 parts by mass.

### [Urethane resin (B)]

The urethane resin (B) (hereinafter also simply referred to as "the component (B)") in the present invention is a resin obtained by polymerizing:
a polyiso(thio)cyanate compound (B1) (hereinafter also simply referred to as "the component (B1)" or "the
polyiso(thio)cyanate compound (B1)") having two or more iso(thio)cyanate groups within a molecule;
a poly(thi)ol compound (B2) (hereinafter also simply referred to as "the component (B2)" or "the poly(thi)ol compound (B2)") having, within a molecule, two or more active hydrogen-containing groups selected from a hydroxy group and a thiol group; and
a mono(thi)ol compound (B3) (hereinafter also simply referred to as "the component (B3)" or "the mono(thi)ol compound (B3)") having, within a molecule, one active hydrogen-containing group selected from a hydroxy group and a thiol group.

In the present specification, the "iso(thio)cyanate group" means both an "isocyanate group" and an "isothiocyanate group". The "having two or more iso(thio)cyanate groups within a molecule" means "having two or more isocyanate groups within a molecule", "having two or more isothiocyanate groups within a molecule" or "having an isocyanate group and an isothiocyanate group within a molecule and the total number of groups described above is two or more". The "having, within a molecule, two or more active hydrogen-containing groups selected from a hydroxy group and a thiol group" means "having, within a molecule, two or more hydroxy groups", "having, within a molecule, two or more thiol groups" or "having, within a molecule, a hydroxy group and a thiol group, and the total number of groups described above is two or more".

### [Polyiso(thio)cyanate compound (B1)]

In the urethane resin (B) of which the adhesive layer is mainly formed, the polyiso(thio)cyanate compound (B1) is used as a raw material.

### (Component (B1); polyisocyanate compound)

Examples of the polyisocyanate compound of the polyiso(thio)cyanate compound include an aliphatic isocyanate compound, an alicyclic isocyanate compound, an aromatic isocyanate compound, a sulfur-containing aliphatic isocyanate compound, an aliphatic sulfide isocyanate compound, an aromatic sulfide isocyanate compound, an aliphatic sulfone isocyanate compound, an aromatic sulfone isocyanate compound, a sulfonic acid ester isocyanate compound, an aromatic sulfonic acid amide isocyanate compound, a sulfur-containing heterocyclic isocyanate compound. Among them, as compounds which have high adhesion between the pair of optical article plates, which are excellent in transparency and mechanical strength and which are suitable for forming the photochromic optical article, compounds represented by formulas (I) to (VI) below are mentioned.

### (Component (B1); polyisocyanate compound having alkylene group)

OCN-R¹⁰⁰-NCO (I)

In the formula, R¹⁰⁰ represents an alkylene group having 1 to 10 carbon atoms, and part of carbon atoms in the chain of the alkylene group may be substituted with sulfur atoms.

The alkylene group serving as R¹⁰⁰ may be linear or branched. Among alkylene groups, a linear group which is a pentamethylene group, a hexamethylene group, a heptamethylene group or an octamethylene group and a branched group in which part of hydrogen atoms in a pentamethylene group, a hexamethylene group, a heptamethylene group or an octamethylene group may be substituted with methyl groups are preferable. As the alkylene group in which part of carbon atoms are substituted with sulfur atoms, -CH₂CH₂SCH₂CH₂SCH₂CH₂-is preferable.

Specific examples of the compound represented by formula (I) above include pentamethylene diisocyanate, hexamethylene diisocyanate, heptamethylene diisocyanate, octamethylene diisocyanate, 2,4,4-trimethylhexane methylene diisocyanate, 1,2-bis(2-isocyanatoethylthio)ethane. Among these compounds, one type may be used singly or two or more types may be used together.

### (Component (B1); polyisocyanate compound having benzene ring or cyclohexane ring)

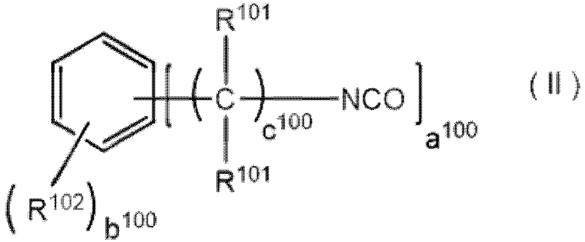

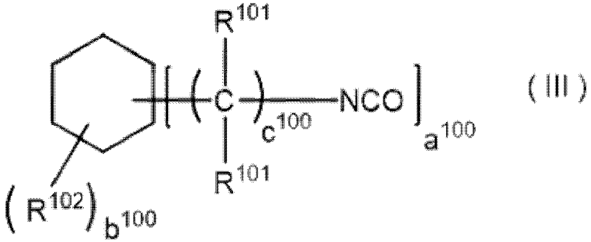

In the formulas, R¹⁰¹s each independently represent a hydrogen atom or an alkyl group having 1 to 4 carbon atoms. R¹⁰² represents an alkyl group having 1 to 4 carbon atoms, and when a plurality of groups are present, they may be the same as or different from each other. a¹⁰⁰ represents 2 or 3, b¹⁰⁰ represents an integer of 0 to 4 and c¹⁰⁰ represents an integer of 0 to 4.

The compound represented by formula (II) above and the compound represented by formula (III) differ from each other in that the former is the compound having a benzene ring and that the latter is the compound having a cyclohexane ring.

The alkyl group serving as R¹⁰¹ may be linear or branched. In particular, R¹⁰¹ is preferably a hydrogen atom, a methyl group or an ethyl group. The alkyl group serving as R¹⁰² may be linear or branched. In particular, R¹⁰² is preferably a hydrogen atom, a methyl group or an ethyl group.

Specific examples of the compound represented by formula (II) above or formula (III) above include isophorone diisocyanate, xylene diisocyanate (o-, m-, p-), 2,4-tolylene diisocyanate, 2,6-tolylene diisocyanate, 1,3-bis(isocyanatomethyl)cyclohexane (mixture of isomers). Among these compounds, one type may be used singly or two or more types may be used together.

### (Component (B1); polyisocyanate compound having two benzene rings or two cyclohexane rings)

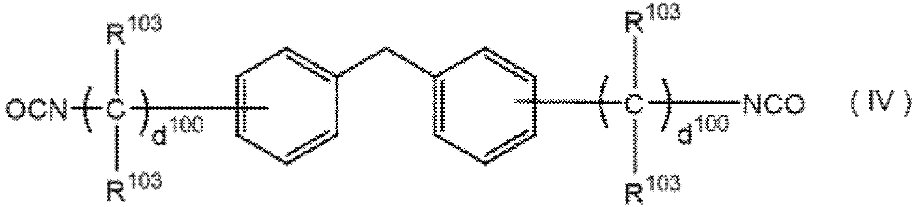

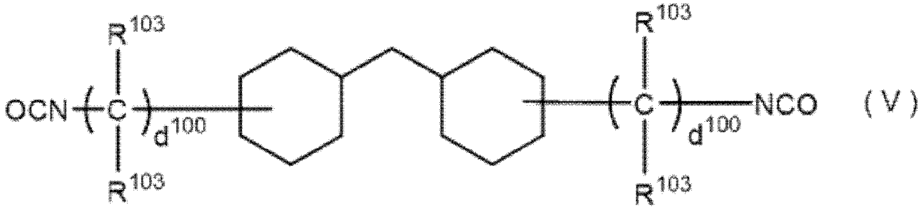

In the formulas, R¹⁰³s each independently represent a hydrogen atom or an alkyl group having 1 to 4 carbon atoms. d¹⁰⁰ represents an integer of 0 to 4.

The compound represented by formula (IV) above and the compound represented by formula (V) above differ from each other in that the former is the compound having two benzene rings and that the latter is the compound having two cyclohexane rings.

The alkyl group serving as R¹⁰³ may be linear or branched. In particular, R¹⁰³ is preferably a hydrogen atom, a methyl group or an ethyl group.

Specific examples of the compound represented by formula (IV) above or formula (V) above include 4,4'-diphenylmethane diisocyanate, dicyclohexylmethane-4,4'-diisocyanate. Among these compounds, one type may be used singly or two or more types may be used together.

### (Component (B1); polyisocyanate compound having norbornane ring)

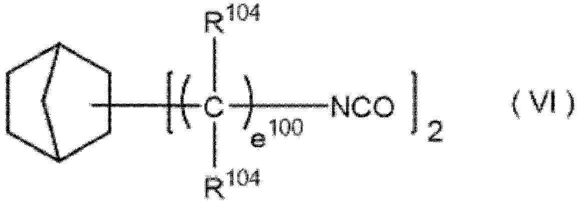

In the formula, R¹⁰⁴s each independently represent a hydrogen atom or an alkyl group having 1 to 4 carbon atoms. e¹⁰⁰ represents an integer of 0 to 4.

The alkyl group serving as R¹⁰⁴ may be linear or branched. In particular, R¹⁰⁴ is preferably a hydrogen atom, a methyl group or an ethyl group.

Specific examples of the compound represented by formula (VI) above include norbornane diisocyanate, 2,5-bis(isocyanatomethyl)-bicyclo[2,2,1]-heptane, 2,6-bis(isocyanatomethyl)-bicyclo[2,2,1]-heptane. Among these compounds, one type may be used singly or two or more types may be used together. A halogen-substituted compound, an alkyl-substituted compound, an alkoxy-substituted compound or a nitro-substituted compound of the polyisocyanate compound described above, a prepolymer modified product with a polyhydric alcohol, a carbodiimide modified product, a urea modified product, a biuret modified product, a dimerization or trimerization reaction product can be used.

### (Component (B1); polyisothiocyanate compound)

Examples of the polyisothiocyanate compound of the polyiso(thio)cyanate compound include compounds obtained by substituting, in the polyisocyanate compounds represented by formulas (I) to (VI) above, the isocyanate group with the isothiocyanate group. More specific examples include an aliphatic isothiocyanate compound, an alicyclic isothiocyanate compound, an aromatic isothiocyanate compound, a heterocyclic isothiocyanate compound, a sulfur-containing aliphatic isothiocyanate compound, a sulfur-containing aromatic isothiocyanate compound, a sulfur-containing heterocyclic isothiocyanate compound.

Examples of the aliphatic isothiocyanate compound include 1,2-diisothiocyanate ethane, 1,3-diisothiocyanate propane, 1,4-diisothiocyanate butane, 1,6-diisothiocyanate hexane, p-phenylene diisopropylidene diisothiocyanate.

Examples of the alicyclic isothiocyanate compound include cyclohexyl isothiocyanate, cyclohexane diisothiocyanate, 2,4-bis(isothiocyanatomethyl)norbornane, 2,5-bis(isothiocyanatomethyl)norbornane, 3,4-bis(isothiocyanatomethyl)norbornane, 3,5-bis(isothiocyanatomethyl)norbornane.

Examples of the aromatic isothiocyanate compound include phenylisothiocyanate, 1,2-diisothiocyanate benzene, 1,3-diisothiocyanate benzene, 1,4-diisothiocyanate benzene, 2,4-diisothiocyanate toluene, 2,5-diisothiocyanate m-xylene, 4,4'-diisothiocyanate 1,1'-biphenyl, 1,1'-methylenebis(4-isothiocyanatebenzene), 1,1'-methylenebis(4-isothiocyanate 2-methylbenzene), 1,1'-methylenebis(4-isothiocyanate 3-methylbenzene), 1,1'-(1,2-ethanediyl)bis(4-isothiocyanatebenzene), 4,4'-diisothiocyanate benzophenone, 4,4'- diisothiocyanate 3,3'-dimethylbenzophenone, benzanilide-3,4'-diisothiocyanate, diphenyl ether-4,4'-diisothiocyanate, diphenylamine-4,4'-diisothiocyanate.

Examples of the heterocyclic isothiocyanate compound include 2,4,6-triisothiocyanate 1,3,5-triazine.

Examples of a carbonyl isothiocyanate compound include hexanedioyl diisothiocyanate, nonanedioyl diisothiocyanate, carbonic diisothiocyanate, 1,3-benzenedicarbonyldiisothiocyanate, 1,4-benzenedicarbonyldiisothiocyanate, (2,2'-bipyridine)-4,4'-dicarbonyldiisothiocyanate.

Furthermore, in addition to sulfur atoms in the isothiocyanate group, a multifunctional isothiocyanate compound having at least one sulfur atom can be used. Examples of the multifunctional isothiocyanate compound as described above include a sulfur-containing aliphatic isothiocyanate compound, a sulfur-containing aromatic isothiocyanate compound, a sulfur-containing heterocyclic isothiocyanate compound.

Examples of the sulfur-containing aliphatic isothiocyanate compound include thiobis(3-isothiocyanate propane), thiobis(2-isothiocyanate ethane), dithiobis(2-isothiocyanate ethane).

Examples of the sulfur-containing aromatic isothiocyanate compound include 1-isothiocyanate 4-{(2-isothiocyanate)sulfonyl}benzene, thiobis(4-isothiocyanatebenzene), sulfonylbis(4-isothiocyanatebenzene), sulfinylbis(4-isothiocyanatebenzene), dithiobis(4-isothiocyanate benzene), 4-isothiocyanate 1-{(4-isothiocyanatephenyl)sulfonyl}-2-methoxy-benzene, 4-methyl-3-isothiocyanate benzenesulfonyl-4'-isothiocyanate phenyl ester, 4-methyl-3-isothiocyanate benzenesulfonylanilide-3'-methyl-4'-isothiocyanate.

Examples of the sulfur-containing heterocyclic isothiocyanate compound include thiophene-2,5-diisothiocyanate, 1,4-dithiane-2,5-diisothiocyanate.

### (Component (B1); compound having isocyanate group and isothiocyanate group)

In the polyiso(thio)cyanate compound, as a compound having both an isocyanate group and an isothiocyanate group, for example, a compound obtained by substituting at least one isocyanate group with an isothiocyanate group in the polyisocyanate compounds of the specific examples described above and a compound obtained by substituting at least one isothiocyanate group with an isocyanate group in the polyisothiocyanate compounds of the specific examples described above are mentioned.

### (Preferred examples of component (B1))

Among the polyiso(thio)cyanate compounds (B1), with consideration given to uniformity of the urethane resin of the adhesive layer, a compound having 2 to 6 iso(thio)cyanate groups within a molecule is preferable, a compound having 2 to 4 iso(thio)cyanate groups is more preferable and a compound having two iso(thio)cyanate groups is further preferable. Specific examples include pentamethylene diisocyanate, hexamethylene diisocyanate, heptamethylene diisocyanate, octamethylene diisocyanate, isophorone diisocyanate, norbornane diisocyanate, 2,5-bis(isocyanatomethyl)-bicyclo[2,2,1]-heptane, 2,6-bis(isocyanate methyl)-bicyclo[2,2,1]-heptane, 1,2-bis(2-isocyanatoethylthio)ethane, xylene diisocyanate (o-, m-, p-), 2,4-tolylene diisocyanate, 2,6-tolylene diisocyanate, 1,3-bis(isocyanatomethyl)cyclohexane (mixture of isomers), 4,4'-diphenylmethane diisocyanate. Among them, in terms of the weather resistance and the photochromic properties of the adhesive layer and operability when the adhesive layer is formed, isophorone diisocyanate, norbornane diisocyanate and 1,3-bis(isocyanatomethyl)cyclohexane (mixture of isomers) are particularly preferable. Among these compounds, one type may be used singly or two or more types may be used together.

### [Poly(thi)ol compound (B2)]

In the urethane resin (B) of which the adhesive layer is mainly formed, the poly(thi)ol compound (B2) is used as a raw material. As the polyol compound of the poly(thi)ol compound, an aliphatic polyol compound, an aromatic polyol compound having 2 to 6 hydroxy groups are mentioned. Among the poly(thi)ol compounds, as the compound which is suitable for forming the photochromic optical article excellent in transparency and mechanical strength, compounds represented by formulas (VII) to (IX), (XI) to (XIII) and (XV) to (XIX) below are mentioned.

### (Compound (B2); poly(thi)ol compound having alkylene group)

R¹⁰⁵-B¹⁰⁰-R¹⁰⁵ (VII)

In the formula, B¹⁰⁰ represents an alkylene group or an alkenyl group having 2 to 30 carbon atoms. R¹⁰⁵s each independently represent a hydroxy group or a thiol group.

The alkylene group or the alkenyl group serving as B¹⁰⁰ may be linear or branched. In particular, B¹⁰⁰ is preferably a linear alkylene group having 2 to 15 carbon atoms.

Specific examples of the compound represented by formula (VII) above include polyethylene polyol (2 to 15 carbon atoms), 1,10-decanedithiol, 1,8-octanedithiol. Among these compounds, one type may be used singly or two or more types may be used together.

### (Component (B2); poly(thi)ol compound having two or more ether bonds or ester bonds)

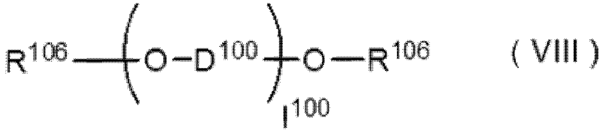

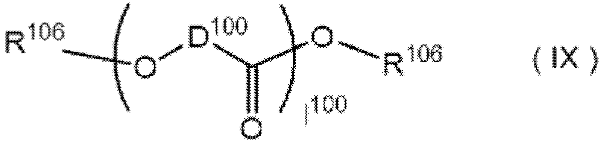

In the formulas, D¹⁰⁰ represents an alkylene group or an alkenyl group having 2 to 15 carbon atoms. I¹⁰⁰ is an average value, and represents a number of 1 to 100. R¹⁰⁶s each independently represent a hydrogen atom or a group represented by formula (X) below.

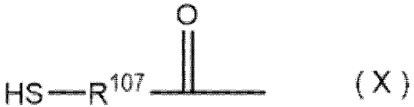

In the formula, R¹⁰⁷ represents an alkylene group having 1 to 6 carbon atoms.

The alkylene group or the alkenyl group serving as D¹⁰⁰ may be linear or branched. In particular, D¹⁰⁰ is preferably a linear alkylene group having 2 to 6 carbon atoms. The alkylene group serving as R¹⁰⁷ may be linear or branched. In particular, R¹⁰⁷ is preferably a methylene group, an ethylene group, a trimethylene group or a propylene group.

Specific examples of the compound represented by formula (VIII) above or formula (IV) above include polyethylene glycol (I¹⁰⁰ = 1 to 100), polycaprolactone polyol (I¹⁰⁰ = 1 to 100), tetraethylene glycol bis(3-mercaptopropionate), 1,4-butanediol bis(3-mercaptopropionate), 1,6-hexanediol bis(3-mercaptopropionate). Among these compounds, one type may be used singly or two or more types may be used together.

### (Component (B2); carbonate polyol compound)

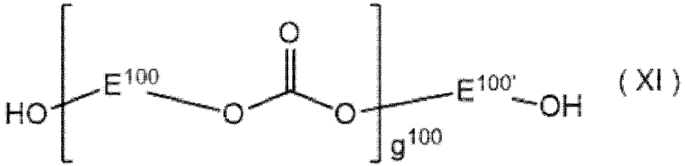

In the formula, E¹⁰⁰ and E¹⁰⁰' each independently represent an alkylene group having 2 to 15 carbon atoms. g¹⁰⁰ is an average value, and represents a number of 1 to 20.

The alkylene groups serving as E¹⁰⁰ and E¹⁰⁰' may be linear or branched. In particular, E¹⁰⁰ and E¹⁰⁰' are preferably a trimethylene group, a tetramethylene group, a pentamethylene group, a hexamethylene group, an octamethylene group, a nonamethylene group, a dodecamethylene group, a pentadecamethylene group, a 1-methyltriethylene group, a 1-ethyltriethylene group or a 1-isopropyltriethylene group.

Specific examples of the compound represented by formula (XI) above include polycarbonate polyol (E¹⁰⁰ and E¹⁰⁰' are a pentamethylene group and a hexamethylene group respectively, g¹⁰⁰ = 4 to 10). Among these compounds, one type may be used singly or two or more types may be used together.

### (Component (B2); polyfunctional polyol compound)

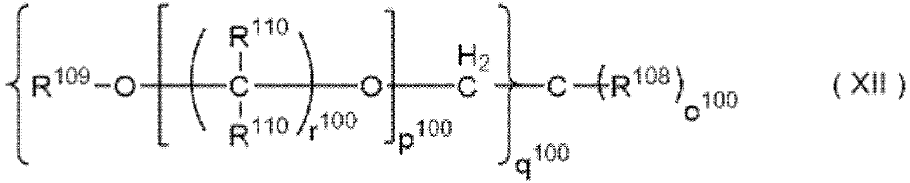

In the formula, R¹⁰⁸ represents an alkyl group having 1 to 6 carbon atoms, and when a plurality of groups are present, they may be the same as or different from each other. R¹⁰⁹s each independently represent a hydrogen atom or the group represented by formula (X) above. R¹¹⁰s each independently represent a hydrogen atom, a methyl group or an ethyl group. o¹⁰⁰ represents an integer of 0 to 2, q¹⁰⁰ represents an integer of 2 to 4 and o¹⁰⁰ + q¹⁰⁰ = 4. p¹⁰⁰ represents an integer of 0 to 10, and r¹⁰⁰ represents an integer of 1 to 6.

The alkyl group serving as R¹⁰⁸ may be linear or branched. In particular, R¹⁰⁸ is preferably a methyl group, an ethyl group, a trimethyl group or a propyl group.

Specific examples of the compound represented by formula (XII) above include ditrimethylolpropane, trimethylolpropane tripolyoxyethylene ether (for example, TMP-30 made by Nippon Nyukazai Co., Ltd.), trimethylolpropane, pentaerythritol, trimethylolpropane tris(3-mercaptopropionate), pentaerythritol tetrakis(3- mercaptopropionate), trimethylolpropane tris(3-mercaptobutyrate), trimethylolpropane trimercaptoacetate. Among these compounds, one type may be used singly or two or more types may be used together.

### (Component (B2); polyol compound having ether bond)

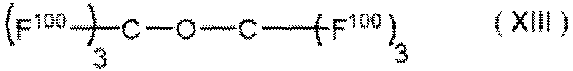

In the formula, F¹⁰⁰s each independently represent an alkyl group having 1 to 6 carbon atoms or a group represented by formula (XIV) below, with the proviso that at least two F¹⁰⁰s are the group represented by formula (XIV) below.

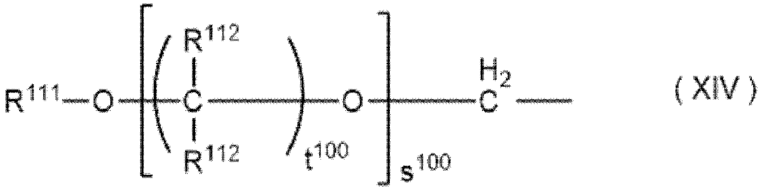

In the formula, R¹¹¹ represents a hydrogen atom or the group represented by formula (X) above. R¹¹²s each independently represent a hydrogen atom, a methyl group or an ethyl group. s¹⁰⁰ represents an integer of 0 to 10, and t¹⁰⁰ represents an integer of 1 to 6.

At least two F¹⁰⁰s are the group represented by formula (XIV) above. Examples of the group other than it include an alkyl group having 1 to 6 carbon atoms. The alkyl group serving as F¹⁰⁰ may be linear or branched. In particular, F¹⁰⁰ is preferably a methyl group, an ethyl group, a trimethyl group or a propyl group.

Specific examples of the compound represented by formula (XIII) above include ditrimethylolpropane, dipentaerythritol hexakis(3-mercaptopropionate). Among these compounds, one type may be used singly or two or more types may be used together.

### (Component (B2); polyol compound having two hydroxy groups)

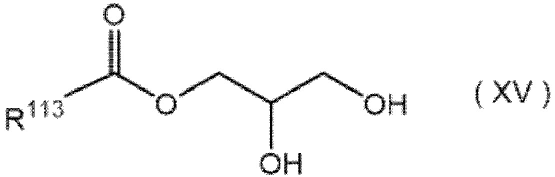

In the formula, R¹¹³ represents an alkyl group or an alkenyl group having 1 to 30 carbon atoms.

The alkyl group or the alkenyl group serving as R¹¹³ may be linear or branched. Since a compound represented by formula (XV) above can be obtained from a condensation reaction of a fatty acid and glycerin, as R¹¹³, an alkyl moiety or an alkenyl moiety of a fatty acid is mentioned. Examples of the fatty acid include capric acid, lauric acid, myristic acid, pentadecyl acid, palmitic acid, margaric acid, stearic acid, oleic acid, linoleic acid, arachidic acid, behenic acid, lignoceric acid.

Specific examples of the compound represented by formula (XV) above include glyceryl monooleate (for example, monoolein made by Tokyo Chemical Industry Co., Ltd.), monoelaidin, glyceryl monolinoleate, glyceryl monobehenate. Among these compounds, one type may be used singly or two or more types may be used together.

### (Component (B2); multifunctional polythiol compound)

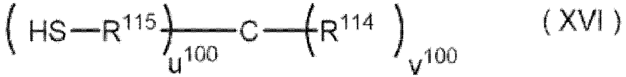

In the formula, R¹¹⁴ represents a hydrogen atom, an alkyl group having 1 to 6 carbon atoms or a group in which part of carbon atoms in the chain of the alkyl group having 1 to 6 carbon atoms are an -S- bond, and when a plurality of groups are present, they may be the same as or different from each other. R¹¹⁵ represents an alkylene group having 1 to 10 carbon atoms, a group in which part of carbon atoms in the chain of the alkylene group having 1 to 10 carbon atoms is an -S- bond or a group obtained by substituting part of hydrogen atoms in these groups with a thiol group, and when a plurality of groups are present, they may be the same as or different from each other. u¹⁰⁰ represents an integer of 2 to 4, and v¹⁰⁰ represents an integer of 0 to 2.

The alkyl group serving as R¹¹⁴ may be linear or branched. In particular, R¹¹⁴ is preferably a hydrogen atom, a methyl group or an ethyl group. As the group in which part of carbon atoms in the chain of the alkyl group having 1 to 6 carbon atoms are an -S- bond, -CH₂SCH₃ are mentioned. The alkylene group serving as R¹¹⁵ may be linear or branched. In particular, R¹¹⁵ is preferably a methylene group, an ethylene group, a trimethylene group or a propylene group. As the group in which part of carbon atoms in the chain of the alkylene group having 1 to 10 carbon atoms are an -S- bond, -CH₂S-, -CH₂CH₂S-, - CH₂CH₂CH₂S- are mentioned. Furthermore, as the group obtained by substituting part of hydrogen atoms in the alkylene group having 1 to 10 carbon atoms with a thiol group, - CH₂SCH(SCH₂SH) - are mentioned.

Specific examples of the compound represented by formula (XVI) above include 1,2-bis[(2-mercaptoethyl)thio]-3-mercaptopropane, 2,2-bis(mercaptomethyl)-1,4-butanedithiol, 4-mercaptomethyl-1,8-dimercapto-3,6-dithiaoctane, 1,1,1,1-tetrakis(mercaptomethyl)methane, 1,1,3,3-tetrakis(mercaptomethylthio)propane, 1,1,2,2-tetrakis(mercaptomethylthio)ethane. Among these compounds, one type may be used singly or two or more types may be used together.

### (Component (B2); cyclic polythiol compound)

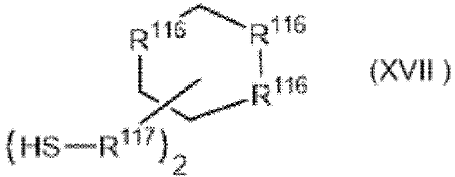

In the formula, R¹¹⁶s each independently represent a methylene group or a sulfur atom, with the proviso that at least two R¹¹⁶s are a sulfur atom. R¹¹⁷ represents an alkylene group having 1 to 6 carbon atoms or a group in which part of carbon atoms in the chain of the alkylene group having 1 to 6 carbon atoms are an -S- bond.

The alkylene group serving as R¹¹⁷ may be linear or branched. In particular, R¹¹⁷ is preferably a methylene group, an ethylene group, a trimethylene group or a propylene group. As the group in which part of carbon atoms in the chain of the alkylene group having 1 to 6 carbon atoms are an -S- bond, - CH₂S-, -CH₂CH₂S- are mentioned.

Specific examples of the compound represented by formula (XVII) above include 2,5-bis(mercaptomethyl)-1,4-dithiane, 4,6-bis(mercaptomethylthio)-1,3-dithiane. Among these compounds, one type may be used singly or two or more types may be used together.

### (Component (B2); polythiol compound having benzene ring)

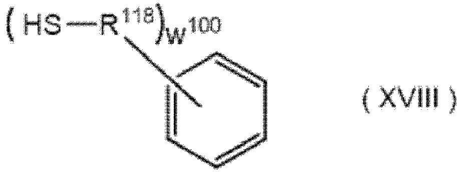

In the formula, R¹¹⁸s each independently represent an alkylene group having 1 to 6 carbon atoms or a group in which part of carbon atoms in the chain of the alkylene group having 1 to 6 carbon atoms are an -S- bond. w¹⁰⁰ represents 2 or 3.

The alkylene group serving as R¹¹⁸ may be linear or branched. In particular, R¹¹⁸ is preferably a methylene group, an ethylene group, a trimethylene group or a propylene group. As the group in which part of carbon atoms in the chain of the alkylene group having 1 to 6 carbon atoms are an -S- bond, - CH₂CH₂CH₂SCH₂-, -CH₂CH₂SCH₂-, -CH₂SCH₂- are mentioned.

Specific examples of the compound represented by formula (XVIII) above include 1,4-bis(mercaptopropylthiomethyl)benzene. Among these compounds, one type may be used singly or two or more types may be used together.

### (Component (B2); poly(thi)ol compound having triazine ring)

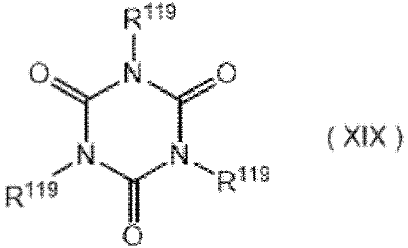

In the formula, R¹¹⁹s each independently represent an alkyl group having 1 to 6 carbon atoms or a group represented by formula (XX) below, with the proviso that at least two R¹¹⁹s are the group represented by formula (XX) below.

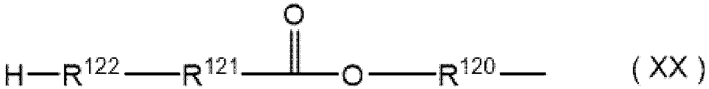

In the formula, R¹²⁰ and R¹²¹ each independently represent an alkylene group having 1 to 6 carbon atoms. R¹²² represents an oxygen atom or a sulfur atom.

The alkylene groups serving as R¹²⁰ and R¹²¹ may be linear or branched. In particular, R¹²⁰ and R¹²¹ are preferably a methylene group, an ethylene group, a trimethylene group or a propylene group.

Specific examples of the compound represented by formula (XIX) above include 2-mercaptomethanol, tris-{(3-mercaptopropionyloxy)-ethyl}-isocyanurate. Among these compounds, one type may be used singly or two or more types may be used together.

Examples of the preferred polyol compound other than the compounds represented by formulas (VII) to (IX), (XI) to (XIII) and (XV) to (XIX) above include glycerin, diglycerin and sorbitol and derivatives obtained by reaction of glycerin, diglycerin and sorbitol with polyethylene glycol, polypropylene glycol, polybutylene glycol.

### (Preferred examples of component (B2))

Among the poly(thi)ol compounds (B2), with consideration given to the photochromic properties of the obtained photochromic optical article, a compound having, within a molecule, 2 to 6 active hydrogen-containing groups selected from a hydroxy group and a thiol group is preferable, and a compound having 4 to 6 active hydrogen-containing groups is more preferable. Specific examples of the compound having three active hydrogen-containing groups include trimethylolpropane, trimethylolpropane tris(3-mercaptopropionate), trimethylolpropane tris(3-mercaptobutyrate), trimethylolpropane trimercaptoacetate, 1,2-bis[(2-mercaptoethyl)thio]-3-mercaptopropane, tris-{(3-mercaptopropionyloxy)-ethyl}-isocyanurate. Specific examples of the compound having 4 to 6 active hydrogen-containing groups include pentaerythritol, pentaerythritol tetrakis(3-mercaptopropionate), dipentaerythritol hexakis(3-mercaptopropionate), 1,1,1,1-tetrakis(mercaptomethyl)methane, 1,1,3,3-tetrakis(mercaptomethylthio)propane, 1,1,2,2-tetrakis(mercaptomethylthio)ethane. Among these compounds, one type may be used singly or two or more types may be used together.

### [Component (B3); mono(thi)ol compound]

In the urethane resin (B) of which the adhesive layer is mainly formed, it is important to use, in addition to the component (B1) and the component (B2), the mono(thi)ol compound (B3). By use of the component (B3), there is a tendency that the adhesion of the adhesive layer is enhanced and that the photochromic properties (color optical density and color degradation speed) of the photochromic optical article are enhanced. Although the reason why the photochromic properties are enhanced is not clear, it is estimated as follows. When the component (B1) is made to react with the component (B2), a rigid hardened material of a mesh structure having a (thio)urethane bond is obtained. Furthermore, when the component (B3) is mixed therein, the mono(thi)ol compound having a structure with one end free is incorporated into the mesh structure, and thus a flexible space is formed around the mono(thi)ol compound. It is considered that consequently, in the photochromic compound present around this space, a reversible structural change occurs more rapidly, and that thus the photochromic properties (color optical density and color degradation speed) are enhanced.

Furthermore, the component (B3) has only one hydroxy group or thiol group so as to have a smaller number of hydrogen bonds than the poly(thi)ol compound. Consequently, it is possible to reduce the viscosity of the photochromic polymerizable composition, and it is considered that handleability when the photochromic optical article is manufactured is enhanced and that moldability is enhanced.

Examples of the monool compound of the mono(thi)ol compound include polyoxyethylene monoalkyl ether, polyoxypropylene monoalkyl ether, polyoxyethylene polyoxypropylene monoalkyl ether, polyethylene glycol monooleyl ether, polyoxyethylene oleate, polyethylene glycol monolaurate, polyethylene glycol monostearate, polyethylene glycol mono-4-octyl phenyl ether, linear polyoxyethylene alkyl ethers (such as polyethylene glycol monomethyl ether, polyoxyethylene lauryl ether, polyoxyethylene-2-ethylhexyl ether, polyoxyethylene tridecyl ether, polyoxyethylene cetyl ether and polyoxyethylene stearyl ether), linear or branched saturated alkyl alcohols having 5 to 30 carbon atoms.

Examples of the monothiol compound of the mono(thi)ol compound include 3-methoxybutyl thioglycolate, 2-ethylhexyl thioglycolate, 2-mercaptoethyl octanoic acid ester, 3-mercaptopropionic acid-3-methoxybutyl, 3-mercaptopropionate ethyl, 3-mercaptopropionic acid-2-octyl, n-octyl-3-mercaptopropionate, methyl-3-mercaptopropionate, tridecyl-3-mercaptopropionate, stearyl-3-mercaptopropionate, linear or branched saturated or unsaturated alkyl thiols having 5 to 30 carbon atoms.

Among these mono(thi)ol compounds, since the adhesion and the photochromic properties can be enhanced by the addition of a small amount, polyoxyethylene monoalkyl ether, polyoxypropylene monoalkyl ether, polyoxyethylene polyoxypropylene monoalkyl ether, polyethylene glycol monooleyl ether, polyoxyethylene oleate, polyethylene glycol monolaurate, polyethylene glycol monostearate, polyethylene glycol mono-4-octyl phenyl ether, linear polyoxyethylene alkyl ethers (such as polyethylene glycol monomethyl ether, polyoxyethylene lauryl ether, polyoxyethylene-2-ethylhexyl ether, polyoxyethylene tridecyl ether, polyoxyethylene cetyl ether and polyoxyethylene stearyl ether), linear or branched saturated alkyl alcohols having 5 to 30 carbon atoms, 3-mercaptopropionic acid-2-octyl, n-octyl-3-mercaptopropionate, methyl-3-mercaptopropionate, tridecyl-3-mercaptopropionate, stearyl-3-mercaptopropionate and linear or branched saturated or unsaturated alkyl thiols having 5 to 30 carbon atoms are preferable. Among these compounds, one type may be used singly or two or more types may be used together.

Since the component (B3) more enhances the photochromic properties, a compound whose molecular weight is 100 or greater is preferable and a compound whose molecular weight is 150 or greater is more preferable. In order to enhance the moldability of the adhesive layer including the urethane resin (B), it is also effective to mix together the component (B3) of a low molecular weight (low viscosity) and the component (B3) of a high molecular weight (high viscosity) together so as to low the viscosity of the photochromic polymerizable composition.

When the total amount of the component (B1), the component (B2) and the component (B3) is assumed to be 100 parts by mass, the content of the component (B3) is preferably 2 to 40 parts by mass, and more preferably 5 to 15 parts by mass. The content of the component (B3) is set equal to or greater than 2 parts by mass, and thus the adhesion and the photochromic properties tend to be more enhanced. The content of the component (B3) is set equal to or less than 40 parts by mass, and thus a decrease in the heat resistance of the adhesive layer tends to be reduced.

### [Mixing ratio of component (B1), component (B2) and component (B3)]

In order to enhance the adhesion and the photochromic properties, the urethane resin (B) of which the adhesive layer is mainly formed is preferably obtained by polymerizing the component (B1), the component (B2) and the component (B3) at a mixing ratio below. Specifically, when the total number of moles of the iso(thio)cyanate group in the component (B1) is assumed to be n1, the total number of moles of the active hydrogen-containing group in the component (B2) is assumed to be n2 and the total number of moles of the active hydrogen-containing group in the component (B3) is assumed to be n3, it is preferable that n1:(n2+n3) = 0.9 to 1.5:1, and it is more preferable that n1:(n2+n3) = 1.0 to 1.15:1. Moreover, it is preferable that n2:n3 = 1 to 300:1, and it is more preferable that n2:n3 = 3 to 50:1. When the contents of the component (B1), the component (B2) and the component (B3) are converted to mass, with respect to the total of 100 parts by mass of the component (B1), the component (B2) and the component (B3), it is preferable that the content of the component (B1) be 20 to 74 parts by mass, that the content of the component (B2) be 21 to 75 parts by mass and that the content of the component (B3) be 2 to 40 parts by mass, and it is more preferable that the content of the component (B1) be 35 to 64 parts by mass, that the content of the component (B2) be 29 to 59 parts by mass and that the content of the component (B3) be 5 to 15 parts by mass.

The urethane resin (B) of which the adhesive layer is mainly formed may be obtained by further polymerizing the component (B1), the component (B2) and the component (B3) which are essential and other monomers (other monomers having an iso(thio)cyanate group or an active hydrogen-containing group). Among the other monomers, a polyrotaxane monomer (B4) (hereinafter also simply referred to as "the component (B4)" or "the polyrotaxane monomer (B4)") is preferable which has a complex molecular structure formed with an axis molecule and a plurality of cyclic molecules including the axis molecule and in which the cyclic molecule has an iso(thio)cyanate group or an active hydrogen-containing group selected from a hydroxy group and a thiol group.

### [Component (B4); polyrotaxane monomer]

The urethane resin (B) of which the adhesive layer is mainly formed is preferably obtained by polymerizing, in addition to the component (B1), the component (B2) and the component (B3), the polyrotaxane monomer (B4). By use of the component (B4), there is a tendency that the adhesion of the adhesive layer is more enhanced and that the photochromic properties of the photochromic optical article are more enhanced. Although the reason is not clear, it is estimated as follows. Specifically, it is considered that the component (B4) is polymerized with the compound of at least one of the component (B1) and the component (B2) so as to provide flexibility to the adhesive layer, and that thus the adhesion to the optical article plate is enhanced. It is also considered that the photochromic compound is present around the component (B4) so as to be homogeneously held in a state where the photochromic compound is dispersed and that thus excellent photochromic properties can be maintained so as to be developed.

As shown in Fig. 2, the polyrotaxane monomer 10 has a complex molecular structure formed with a chain-shaped axis molecule 20 and cyclic molecules 30. More specifically, a plurality of cyclic molecules 30 includes the chain-shaped axis molecule 20, and the polyrotaxane monomer 10 has the structure in which the axis molecule 20 penetrates the interiors of the rings of the cyclic molecules 30. Although the cyclic molecules 30 can freely slide on the axis molecule 20, bulky end groups 40 are formed at both ends of the axis molecule 20, and thus the cyclic molecules 30 are prevented from dropping off the axis molecule 20. In this way, the cyclic molecules 30 included in the polyrotaxane monomer 10 can slide on the axis molecule 20, and thus a local pressure from the outside are easily relieved when the adhesive layer is formed, with the result that it is possible to enhance the adhesion between the adhesive layer and the optical article plate. In the polyrotaxane monomer 10 shown in Fig. 2, a side chain 50 is introduced into the ring of the cyclic molecule 30.

The polyrotaxane monomer is a known compound, and can be synthesized by a method disclosed in PCT International Publication No. WO2015/068798.

### (Component (B4); axis molecule)

The chain-shaped part of the axis molecule is not particularly limited as long as it can penetrate the ring of the cyclic molecule, and may be linear or branched. The chain-shaped part is generally formed of a polymer. Examples of the preferred polymer forming the chain-shaped part of the axis molecule include polyethylene glycol, polyisoprene, polyisobutylene, polybutadiene, polypropylene glycol, polytetrahydrofuran, polydimethylsiloxane, polyethylene, polypropylene, polyvinyl alcohol, polyvinyl methyl ether.

The bulky end groups formed at both ends of the chain-shaped part are not particularly limited as long as the bulky end group is a group which prevents the cyclic molecule from dropping off the axis molecule. Specific examples include an adamantyl group, a trityl group, a fluoresceinyl group, a dinitrophenyl group, a pyrenyl group, and the adamantyl group is preferable in terms of ease of the introduction.

Although the weight-average molecular weight (Mw) of the axis molecule is not particularly limited, it preferably falls within a range of 1000 to 100000, more preferably falls within a range of 5000 to 80000 and further preferably falls within a range of 10000 to 500000. The weight-average molecular weight (Mw) of the axis molecule is equal to or greater than 1000, and thus the mobility of the cyclic molecule tends to be enhanced. The weight-average molecular weight (Mw) of the axis molecule is equal to or less than 100000, and thus compatibility with other components tends to be enhanced.

### (Component (B4); cyclic molecule)

The cyclic molecule has the ring which has such a size as to be able to include the axis molecule. Examples of the ring as described above include a cyclodextrin ring, a crown ether ring, a benzocrown ring, a dibenzocrown ring, a dicyclohexanocrown ring, and the cyclodextrin ring is preferable. As the types of cyclodextrin ring, α body (ring inner diameter: 0.45 to 0.6 nm), β body (ring inner diameter: 0.6 to 0.8 nm) and γ body (ring inner diameter: 0.8 to 0.95 nm) are present, and the α-cyclodextrin ring is preferable.

A plurality of cyclic molecules is included in one axis molecule. When the maximum inclusion number of cyclic molecules which can include one axis molecule is assumed to be 1, the inclusion number of cyclic molecules generally falls within a range of 0.001 to 0.6, preferably falls within a range of 0.002 to 0.5 and more preferably falls within a range of 0.003 to 0.4.

The maximum inclusion number of cyclic molecules for one axis molecule can be calculated from the length of the axis molecule and the thickness of the ring of the cyclic molecule. For example, when a case where the chain-shaped part of the axis molecule is formed of polyethylene glycol and where the ring of the cyclic molecule is the α-cyclodextrin ring is used as an example, the maximum inclusion number is calculated as follows. Specifically, two repeating units [-CH₂CH₂O-] of polyethylene glycol are approximated to the thickness of one α-cyclodextrin ring. Hence, the number of repeating units is calculated from the molecular weight of this polyethylene glycol, and a half of the number of repeating units is determined as the maximum inclusion number of cyclic molecules. This maximum inclusion number is assumed to be 1.0, and the inclusion number of cyclic molecules is adjusted within the range described above.

### (Component (B4); side chain)

The side chains may be introduced into the rings of the cyclic molecules. With the side chains as described above, a pseudo cross-linked structure can be formed in the polyrotaxane monomer (B4), and thus it is possible to provide flexibility to the adhesive layer, with the result that the adhesion to the optical article plate can be enhanced.

The side chain is preferably formed with the repeating units of an organic group having 3 to 20 carbon atoms. Although the weight-average molecular weight (Mw) of the side chain is not particularly limited, it preferably falls within a range of 200 to 10000, more preferably falls within a range of 250 to 8000, further preferably falls within a range of 300 to 5000 and particularly preferably falls within a range of 300 to 1500. The weight-average molecular weight (Mw) of the side chain is equal to or greater than 200, and thus the pseudo cross-linked structure tends to be easily formed. The weight-average molecular weight (Mw) of the side chain is equal to or less than 10000, and thus an increase in the viscosity of the photochromic polymerizable composition is reduced, with the result that handleability when the photochromic optical article is manufactured tends to be satisfactory.

The side chain described above can be introduced by the utilization of a functional group (for example, a hydroxy group) included in the ring of the cyclic molecule and the modification of this functional group. For example, the α-cyclodextrin ring has 18 hydroxy groups as functional groups, and the side chains can be introduced through the hydroxy groups described above. In other words, 18 side chains can be introduced into one α-cyclodextrin ring at the maximum. In order for the function of the side chains described above to be sufficiently achieved, 6% or greater of the total number of functional groups included in the rings, in particular, 30% or greater of the total number is preferably modified with the side chains. When the side chains are bonded to 9 out of 18 hydroxy groups in the α-cyclodextrin ring, the modification degree thereof is 50%.

The side chains (organic chain) described above may be linear or branched. By utilization of ring-opening polymerization, radical polymerization, cationic polymerization anionic polymerization, living radical polymerization such as atom transfer radical polymerization, RAFT polymerization or NMP polymerization, an appropriate compound is made to react with the rings of the cyclic molecules, and thus the side chains having an appropriate size can be introduced. For example, by ring-opening polymerization, side chains derived from a cyclic compound such as cyclic lactone, cyclic ether, cyclic acetal, cyclic amine, cyclic carbonate, cyclic iminoether or cyclic thiocarbonate can be introduced. Among them, in terms of ease of availability, high reactivity and ease of adjustment of the size (molecular weight), cyclic ether, cyclic siloxane, cyclic lactone or cyclic carbonate is preferably used. Specific examples of the preferred cyclic compound are disclosed in PCT International Publication No. WO2015/068798. Among them, as the cyclic compound, cyclic lactone and cyclic carbonate are preferable, lactones such as ε-caprolactone, α-acetyl-γ-butyrolactone, α-methyl-γ-butyrolactone, γ-valerolactone and γ-butyrolactone are more preferable and ε-caprolactone is further preferable.

When the cyclic compound is made to react by ring-opening polymerization so as to introduce the side chains, it is likely that the functional group (for example, a hydroxy group) which is bounded to the ring is poorly reactive and that thus it is difficult to make a large molecule directly react therewith due to a three-dimensional obstacle. In such a case, for example, a method can be adopted in which a low molecular weight compound such as propylene oxide is made to react with a functional group so as to perform hydroxypropylation, and in which after the introduction of a highly reactive functional group (hydroxy group), the side chains are introduced by ring-opening polymerization using the cyclic compound described above. The low molecular weight compound such as propylene oxide can be regarded as the side chain.

Although as described above, the side chains can be introduced into the polyrotaxane monomer (B4) by ring-opening polymerization, it is also possible to naturally introduce the side chains by another known method with another known compound.

### (Component (B4); iso(thio)cyanate group or active hydrogen-containing group)

As described above, the cyclic molecule has the iso(thio)cyanate group or the active hydrogen-containing group selected from a hydroxy group and a thiol group. In terms of the adhesion and the photochromic properties, the iso(thio)cyanate group or the active hydrogen-containing group is preferably introduced into the side chain (in particular, the end of the side chain). In particular, with consideration given to the productivity of the polyrotaxane monomer (B4) itself, a cyclic molecule which has a hydroxy group in the side chain is preferable.

### (Preferred examples of component (B4))

Among the polyrotaxane monomers (B4), a polyrotaxane monomer is preferable in which polyethylene glycol where adamantyl groups are coupled to both ends is used as the axis molecule, in which the α-cyclodextrin ring is used as the cyclic molecule and in which furthermore, the side chains (the ends are hydroxy groups) are introduced into the rings with polycaprolactone.

### [Mixing ratio of component (B1), component (B2), component (B3) and the component (B4)]

Although the component (B4) is used so as to more enhance the adhesion and the photochromic properties, when the amount of the component (B4) is excessively large, a problem can occur in the handleability due to an increase in the viscosity. On the other hand, when the amount of the component (B4) is excessively small, the component (B4) only slightly contributes to the adhesion and the photochromic properties. In a mixing ratio when the component (B4) is included, with respect to the total of 100 parts by mass of the component (B1), the component (B2), the component (B3) and the component (B4), it is preferable that the content of the component (B1) be 20 to 74 parts by mass, that the content of the component (B2) be 20 to 74 parts by mass, that the content of the component (B3) be 2 to 40 parts by mass and that the content of the component (B4) be 1 to 30 parts by mass, and it is more preferable that the content of the component (B1) be 35 to 64 parts by mass, that the content of the component (B2) be 26 to 59 parts by mass, that the content of the component (B3) be 5 to 25 parts by mass and that the content of the component (B4) be 2 to 9 parts by mass.

In the present embodiment, in view of the photochromic properties, the durability and the adhesion of the photochromic optical article, the mixing ratio of the component (B1), the component (B2), the component (B3) and the component (B4) can be adjusted as necessary. In a case where the component (B4) has the iso(thio)cyanate group, when the total number of moles of the iso(thio)cyanate group in the component (B1) is assumed to be n1, the total number of moles of the active hydrogen-containing group in the component (B2) is assumed to be n2, the total number of moles of the active hydrogen-containing group in the component (B3) is assumed to be n3 and the total number of moles of the iso(thio)cyanate group in the component (B4) is assumed to be n4, it is preferable that (n1+n4):(n2+n3) = 0.9 to 1.5:1, and it is more preferable that (n1+n4):(n2+n3) = 1.0 to 1.15:1. In a case where the component (B4) has the active hydrogen-containing group, when the total number of moles of the iso(thio)cyanate group in the component (B1) is assumed to be n1, the total number of moles of the active hydrogen-containing group in the component (B2) is assumed to be n2, the total number of moles of the active hydrogen-containing group in the component (B3) is assumed to be n3 and the total number of moles of the active hydrogen-containing group in the component (B4) is assumed to be n4, it is preferable that n1:(n2+n3+n4) = 0.9 to 1.5:1, and it is more preferable that n1:(n2+n3+n4) = 1.0 to 1.15:1. In this case, it is preferable that n2:n3:n4 = 1 to 300:1:0.05 to 10, and it is more preferable that n2:n3:n4 = 3 to 50:1:0.10 to 2. Here, n4 is the number of moles of all the active hydrogen-containing groups included in the component (B4). In other words, the total number of moles of not only the active hydrogen-containing groups included in the side chains of the component (B4) but also, for example, the active hydrogen-containing groups included in the cyclic molecule corresponds to n4.

In order to obtain the urethane resin (B) of which the adhesive layer is mainly formed, it is preferable to polymerize a polymerizable composition which contains the component (B1), the component (B2) and the component (B3) and the component (B4) and other components that are mixed as necessary. In order to accelerate the polymerization, this polymerizable composition may further contain a polymerization hardening accelerator (C).

### [Polymerization hardening accelerator (C)]

As the polymerization hardening accelerator (C) (hereinafter also simply referred to as "the component (C)"), in order to rapidly accelerate the polymerization hardening of the polymerizable composition, a reaction catalyst for urethane or urea, a condensing agent which are effective for reaction with the active hydrogen-containing group and the iso(thio)cyanate group can be used.

### [Component (C); reaction catalyst for urethane or urea]

The reaction catalyst for urethane or urea is used in the generation of a poly(thio)urethane bond caused by reaction of polyiso(thia)cyanate and polyol or polythiol. Examples of the reaction catalyst for urethane or urea include tertiary amines and inorganic or organic salts corresponding to them, phosphines, quaternary ammonium salts, quaternary phosphonium salts, Lewis acids, organic sulfonic acids. Among these reaction catalysts, one type may be used singly or two or more types may be used together.

Examples of the tertiary amines include triethylamine, tri-n-propylamine, triisopropylamine, tri-n-butylamine, triisobutylamine, triethylamine, hexamethylenetetramine, N,N-dimethyloctylamine, N,N,N',N'-tetramethyl-1,6-diaminohexane, 4,4'-trimethylenebis(1-methylpiperidine), 1,8-diazabicyclo-(5,4,0)-7-undecene.

Examples of the phosphines include trimethylphosphine, triethylphosphine, tri-n-propylphosphine, triisopropylphosphine, tri-n-butylphosphine, triphenylphosphine, tribenzylphosphine, 1,2-bis(diphenylphosphino)ethane, 1,2-bis (dimethylphosphino)ethane.

Examples of the quaternary ammonium salts include tetramethylammonium bromide, tetrabutylammonium chloride, tetrabutylammonium bromide.

Examples of the quaternary phosphonium salts include tetramethylphosphonium bromide, tetrabutylphosphonium chloride, tetrabutylphosphonium bromide.

Examples of the Lewis acids include triphenylaluminum, dimethyltin dichloride, dimethyltin bis(isooctyl thioglycolate), dibutyltin dichloride, dibutyltin dilaurate, dibutyltin maleate, dibutyltin maleate polymer, dibutyltin diricinolate, dibutyltin bis(dodecyl mercaptide), dibutyltin bis(isooctyl thioglycolate), dioctyltin dichloride, dioctyltin maleate, dioctyltin maleate polymer, dioctyltin bis(butyl maleate), dioctyltin dilaurate, dioctyltin diricinolate, dioctyltin dioleate dioctyltin di(6-hydroxy)caproate, dioctyltin bis(isooctyl thioglycolate), didodecyltin diricinolate, various metal salts (for example, salts of copper oleate, copper acetylacetonate, iron acetylacetonate, iron naphthenate, iron lactate, iron citrate, iron gluconate, potassium octoate, 2-ethylhexyl titanate) and the like.

Examples of the organic sulfonic acids include methanesulfonic acid, benzenesulfonic acid, p-toluenesulfonic acid.

When the catalytic activity is excessively high depending on the type of compound which is selected, for example, tertiary amines and Lewis acids are mixed so as to be used, and thus it is possible to reduce the catalytic activity.

### [Component (C); condensing agent]

Examples of the condensing agent include: inorganic acids such as hydrogen chloride, hydrogen bromide, sulfuric acid and phosphoric acid; organic acids such as p-toluenesulfonic acid and camphorsulfonic acid; acidic ion exchange resins such as Amberlite (product name) and Amberlyst (product name); carbodiimides such as dicyclohexylcarbodiimide and 1-ethyl-3-(3-dimethylaminopyrrolyl)-carbodiimide. Among these condensing agents, one type may be used singly or two or more types may be used together.

### (Mixing ratio of component (C))

The mixing ratio of the component (C) is preferably a so-called catalyst amount. For example, with respect to the total of 100 parts by mass of the component (B1), the component (B2) and the component (B3), it is preferable that the content of the component (C) be about 0.001 to 10 parts by mass, and it is particularly preferable that the content of the component (C) be about 0.01 to 5 parts by mass. When the component (B4) is used, with respect to the total of 100 parts by mass of the component (B1), the component (B2), the component (B3) and the component (B4), it is preferable that the content of the component (C) be about 0.001 to 10 parts by mass, and it is particularly preferable that the content of the component (C) be about 0.01 to 5 parts by mass.

### [Other mixed components]

As long as the effects of the present invention are not impaired, various types of additives themselves which are known can be mixed in the polymerizable composition described above, and examples thereof include a UV absorber, an antistatic agent, an infrared absorber, a UV stabilizer, an antioxidant, an anti-coloring agent, a fluorescent dye, a dye, a pigment, fragrance, a surfactant, a plasticizer, a solvent, a leveling agent and polymerization modifiers (for example, thiols such as t-dodecyl mercaptan).

The mixing ratio of the additives is set as necessary as long as the effects of the present invention are not impaired. Specifically, with respect to 100 parts by mass of the polymerizable composition, it is preferable that the total amount of additives fall within a range of 0.01 to 10 parts by mass.

Among the additives, the UV stabilizer is preferable because it can enhance the durability of the photochromic compound. Examples of the UV stabilizer as described above include a hindered amine light stabilizer, a hindered phenol antioxidant, a sulfur antioxidant. Examples of the particularly preferred UV stabilizer include: bis(1,2,2,6,6-pentamethyl-4-piperidyl) sebacate; ADEKA STAB LA-52, LA-57, LA-62, LA-63, LA-67, LA-77, LA-82 and LA-87 (all of which are manufactured by ADEKA Corporation); 2,6-di-t-butyl-4-methylphenol, ethylenebis(oxyethylene)bis[3-(5-t-butyl-4-hydroxy-m-tolyl)propionate]; IRGANOX 1010, 1035, 1075, 1098, 1135, 1141, 1222, 1330, 1425, 1520, 259, 3114, 3790, 5057 and 565 (all of which are manufactured by BASF).

The mixing ratio of the UV stabilizer is set as necessary as long as the effects of the present invention are not impaired. Specifically, with respect to the total of 100 parts by mass of the component (B1), the component (B2) and the component (B3), it is preferable that the content of the UV stabilizer be about 0.001 to 10 parts by mass, and it is more preferable that the content of the UV stabilizer be about 0.01 to 1 parts by mass. When the component (B4) is used, with respect to the total of 100 parts by mass of the component (B1), the component (B2), the component (B3) and the component (B4), it is preferable that the content of the UV stabilizer be about 0.001 to 10 parts by mass, and it is more preferable that the content of the UV stabilizer be about 0.01 to 1 parts by mass. In particular, when the hindered amine light stabilizer is used, since the effects of the enhancement of durability are different depending on the type of photochromic compound, in order to prevent the occurrence of a color deviation of color production color tone which is adjusted, it is preferable that the mixing ratio of the hindered amine light stabilizer be 0.5 to 30 moles per mole of the photochromic compound (A), it is more preferable that the mixing ratio of the hindered amine light stabilizer be 1 to 20 moles and it is further preferable that the mixing ratio of the hindered amine light stabilizer be 2 to 15 moles.

Examples of the antistatic agent include an alkali metal or alkaline earth metal salt, a quaternary ammonium salt, surfactants (a nonionic surfactant, an anionic surfactant, a cationic surfactant and an amphoteric surfactant), an ionic liquid (salt which exists as a liquid at room temperature and which exists as a pair of a cation and an anion).

Examples of the alkali metal or alkaline earth metal salt include: salts of alkali metals (such as lithium, sodium and potassium) or alkaline earth metals (such as magnesium and calcium) and organic acids [such as mono or dicarboxylic acids (such as formic acid, acetic acid, propionic acid, oxalic acid and succinic acid) having 1 to 7 carbon atoms, sulfonic acids (such as methanesulfonic acid, trifluoromethanesulfonic acid and p-toluenesulfonic acid) having 1 to 7 carbon atoms and thiocyanic acid]; salts of alkali metals or alkaline earth metals and inorganic acids [such as hydrohalic acids (such as hydrochloric acid and hydrobromic acid), perchloric acid, sulfuric acid, nitric acid and phosphoric acid].

Examples of the quaternary ammonium salts include salts of amidinium (such as 1-ethyl-3-methylimidazolium) or guanidinium (such as 2-dimethylamino-1,3,4-trimethylimidazolinium) and the organic acids or the inorganic acids described above.

Examples of the surfactant include sucrose fatty acid ester, sorbitan fatty acid ester, polyoxyethylene sorbitan fatty acid ester, polyoxyethylene fatty acid ester, fatty acid alkanolamide, polyoxyethylene alkyl ether, alkyl glycoside, polyoxyethylene alkylphenyl ether, higher fatty acid salt (soap), α-sulfo fatty acid methyl ester salt, linear alkylbenzene sulfonate, alkyl sulfate ester salt, alkyl ether sulfate ester salt, (mono)alkyl phosphate ester salt, α-olefin sulfonate salt, alkane sulfonate salt, alkyl trimethyl ammonium salt, dialkyldimethyl ammonium salt, alkyldimethylbenzyl ammonium salt, N-methylbishydroxyethy lamine oil, fatty acid ester hydrochloride, alkylamino fatty acid salt, alkylbetaine, alkylamine oxide.

Examples of the ionic liquid include 1,3-ethylmethylimidazolium bistrifluoromethanesulfonimide, 1,3-ethylmethylimidazolium tetrafluoroborate, 1-ethylpyridinium bistrifluoromethanesulfonimide, 1-ethylpyridinium tetrafluoroborate, 1-ethylpyridinium hexafluoro phosphate, 1-methylpyrazolium bistrifluoromethanesulfonimide.

Among the additives, a coloring agent which has an absorption peak in a wavelength range of 550 to 600 nm is useful in terms of enhancement of anti-glare properties. Examples of the coloring agent include nitro compounds, azo compounds, anthraquinone compounds, slene compounds, porphyrin compounds, rare earth metal compounds. Among them, in terms of a good balance between anti-glare properties and visibility, porphyrin compounds and rare earth metal compounds are preferable, and in terms of dispersion stability in the adhesive layer, porphyrin compounds are more preferable.

Examples of the rare earth metal compounds include complexes such as aqua hydroxy(1-phenyl 1,3-butanedionate)neodymium, aqua hydroxy(phenacylphenyl ketonato)neodymium, aqua hydroxy(1-phenyl-2-methyl-1,3-butanedionate)neodymium, aqua hydroxy(1-thiophenyl-1,3-butanedionate)neodymium, aqua hydroxy(1-phenyl 1,3-butanedionate)erbium and aqua hydroxy(1-phenyl 1,3-butanedionate)holonium.

The porphyrin compounds are compounds which may have various substituents in a porphyrin skeleton, and for example, compounds disclosed in Japanese Unexamined Patent Application, Publication No. H5-194616, Japanese Unexamined Patent Application, Publication No. H5-195446, Japanese Unexamined Patent Application, Publication No. 2003-105218, Japanese Unexamined Patent Application, Publication No. 2008-134618, Japanese Unexamined Patent Application, Publication No. 2013-61653, Japanese Unexamined Patent Application, Publication No. 2015-180942, PCT International Publication No. WO2012/020570, Japanese Patent No. 5626081, Japanese Patent No. 5619472, Japanese Patent No. 5778109.

### [Thickness of adhesive layer]

The photochromic optical article according to the present embodiment includes the urethane resin (B) in the adhesive layer so as to have good adhesion, and the photochromic compound (A) which is dispersed in the urethane resin (B) achieves excellent photochromic properties. Hence, the adhesive layer which includes the photochromic compound (A) and the urethane resin (B) can achieve excellent effects even though it is thin. Specifically, the thickness of the adhesive layer may be equal to or less than 0.8 mm.

With consideration given to operability and excellent effects, the thickness of the adhesive layer is preferably 0.02 to 0.8 mm, more preferably 0.03 to 0.5 mm and further preferably 0.05 to 0.2 mm. The thickness of the adhesive layer is set equal to or greater than 0.02 mm, and thus there is a tendency that the adhesion is enhanced, that the thickness of the film is easily formed to be uniform and that unevenness in density at the time of color production are reduced. The thickness of the adhesive layer is set equal to or less than 0.8 mm, and thus there is a tendency that it is possible to reduce a decrease in durability caused by degradation from an end portion. In particular, when the photochromic optical article according to the present embodiment is used as sunglasses, in terms of strength, the thickness of the optical article plate needs to be kept at about 0.1 to 1.5 mm but in terms of design, in order to reduce the total thickness of the photochromic optical article, the thickness of the adhesive layer is preferably equal to or less than 0.8 mm.

### [Total thickness of photochromic optical article]

The photochromic optical article according to the present embodiment is formed by bonding together the pair of optical article plates each comprising a glass material with the adhesive layer that includes the photochromic compound (A) and the urethane resin (B), and the preferred total thickness of the photochromic optical article obtained from this configuration differs depending on the purpose thereof. For example, in eyeglass lens applications, the preferred total thickness differs between a non-prescription sunglasses application and a prescription lens application.

When the photochromic optical article according to the present embodiment is used as an eyeglass lens, the optical article plate comprising a glass material on a side (inner side) close to an eye and the optical article plate comprising a glass material on a side (outer side) which is far from the eye and to which more sunlight is applied outdoors are combined together.

In the case of the non-prescription sunglasses application, the thicknesses of the optical article plates on the outer and inner sides are preferably equal to or less than 1.5 mm and more preferably equal to or less than 1.0 mm. The thickness of the adhesive layer is preferably equal to or less than 0.8 mm, and more preferably equal to or less than 0.05 to 0.2 mm. Hence, in the case of the non-prescription sunglasses application, the total thickness of the photochromic optical article is preferably equal to or less than 3.8 mm, and more preferably equal to or less than 2.2 mm.

In the case of the prescription lens application, the thickness of the optical article plate on the outer side is preferably equal to or less than 1.5 mm and more preferably equal to or less than 1.0 mm. On the other hand, as the optical article plate on the inner side, an optical article plate which has an appropriate thickness of about 10 to 20 mm may be used, and its concave surface is preferably ground according to the eyesight of the user such that the optical article plate is used. The thickness of the adhesive layer is preferably equal to or less than 0.8 mm, and more preferably equal to or less than 0.05 to 0.2 mm. Hence, in the case of the prescription lens application, the total thickness of the photochromic optical article is preferably equal to or less than 22.3 mm, and more preferably equal to or less than 11.2 mm. However, in the case of the prescription lens application, the final center thickness of the photochromic optical article after being ground is preferably equal to or less than 2.5 mm.

### <Method for manufacturing photochromic optical article>

A method for manufacturing the photochromic optical article according to the present embodiment is not particularly limited.

As an example, the following method can be adopted. First, a polymerizable composition which contains the component (B1), the component (B2) and the component (B3) and the component (B4) and other components that are mixed as necessary is polymerized, and thus the urethane resin (B) is manufactured. Then, the urethane resin (B) and the photochromic compound (A) are sufficiently mixed together so as to prepare an adhesive. Then, the obtained adhesive is applied on one of the optical article plates comprising a glass material so as to form the adhesive layer, and thereafter the other optical article plate is pressed so as to sandwich the adhesive layer, with the result that it is possible to manufacture the photochromic optical article according to the present embodiment.

When relatively thin optical article plates are bonded together with the adhesive layer, it is preferable to adopt the following method. First, the photochromic compound (A) is mixed in a polymerizable composition which contains the component (B1), the component (B2) and the component (B3) and the component (B4) and other components that are mixed as necessary, and thus a photochromic polymerizable composition is prepared. Then, a mold which has a gap is formed with a pair of optical article plates. Then, the photochromic polymerizable composition is injected into the gap between the pair of optical article plates, and thereafter the photochromic polymerizable composition is polymerized, with the result that it is possible to manufacture the photochromic optical article according to the present embodiment. By this method, it is possible to form the adhesive layer in which the photochromic compound (A) is satisfactorily dispersed in the urethane resin (B).

In this method, the gap between the pair of optical article plates is adjusted, and thus it is possible to adjust the thickness of the adhesive layer. At that time, with consideration given to slight polymerization shrinkage, the gap between the pair of optical article plates is preferably adjusted such that the thickness of the adhesive layer is equal to or less than 0.8 mm.

A method for polymerizing the photochromic polymerizable composition is not particularly limited, and a known method can be adopted. In particular, the polymerization is preferably performed by heat. When thermal polymerization is performed, in order to form an adhesive layer having advanced properties (such as smoothness), it is preferable to control a polymerization temperature. Although this temperature condition is affected by the type and the amount of polymerization hardening accelerator, and thus the temperature condition cannot be limited unconditionally, in general, a method for starting the polymerization at a relatively low temperature and slowly increasing the temperature is preferable. However, since in the present embodiment, excellent effects are achieved as the adhesive layer of a thin film, even when strict temperature control is not performed in a relatively short period of time, the photochromic polymerizable composition can be polymerized. Since optimal polymerization conditions are different depending on the materials which are used, for conditions such as the polymerization time and the polymerization temperature, preliminary tests are preferably performed so as to determine optimal values. When a temperature equal to or greater than 90°C is adopted, the polymerization can be completed in a polymerization time of two hours or less.

When the photochromic polymerizable composition described above is used to manufacture the photochromic optical article according to the present embodiment, the following method can also be adopted. For example, the photochromic polymerizable composition is injected into the gap between the pair of optical article plates which are held with an elastomer gasket, an adhesive tape, a spacer, defoaming is sufficiently performed and thereafter polymerization is performed by heating in an air furnace, with the result that it is possible to manufacture the photochromic optical article according to the present embodiment.

However, although the influence of the viscosity of the photochromic polymerizable composition is exerted, when the thickness of the adhesive layer (the gap between the pair of optical article plates) is relatively narrow so as to be equal to or less than, for example, 0.5 mm, it may be difficult to inject the photochromic polymerizable composition by the method described above. In such a case, an amount of photochromic polymerizable composition necessary for achieving a desired thickness is applied on the one of the optical article plates, the other optical article plate is arranged thereon and thereafter the photochromic polymerizable composition is polymerized, with the result that it is possible to form the adhesive layer. In such a case, the pair of optical article plates are only overlaid on each other, and thus the photochromic polymerizable composition may flow out. Hence, in order to reduce the flowing out, the viscosity of the photochromic polymerizable composition at 25°C is preferably set equal to or greater than 100 mPa·s. When the initial viscosity of the photochromic polymerizable composition is less than 100 mPa·s, the viscosity can be adjusted to be equal to or greater than 100 mPa·s by leaving the photochromic polymerizable composition so as to slightly polymerize a monomer component.

When as described above, the photochromic polymerizable composition is applied on one of the optical article plates, the other optical article plate is arranged thereon and thereafter the photochromic polymerizable composition is polymerized, the film thickness of the obtained adhesive layer may be nonuniform. In such a case, it is preferable to polymerize the photochromic polymerizable composition at a temperature less than 90°C for such a relaxation time (polymerization time) that the adhesive layer is uniform.

### <Applications of photochromic optical article>

When the photochromic optical article according to the present embodiment is used as an eyeglass lens of photochromic sign glass, optical article plates which have a curvature (curved surface) are preferably used. Preferably, at that time, the photochromic polymerizable composition is applied to the concave side of the optical article plate on the side far from the eye, and the convex side of the optical article plate on the side close to the eye is brought into contact with the top thereof. By the method described above, it is possible to directly obtain photochromic sunglasses.

### <Others>

In order to provide polarization properties, a polarizing film can further be stacked in layers on the photochromic optical article according to the present embodiment. The position of the polarizing film is not particularly limited, and the polarizing film may be stacked in layers on the outer side of the photochromic optical article, between the optical article plate and the adhesive layer within the photochromic optical article or within the adhesive layer but in terms of adhesiveness, a method for embedding the polarizing film within the adhesive layer is preferable.

A method for stacking the polarizing film in layers is not particularly limited, and a known method is preferably adopted. For example, a method is mentioned in which when the photochromic polymerizable composition is injected between the pair of optical article plates, the polarizing film is arranged between the optical article plate and the photochromic polymerizable composition or within the photochromic polymerizable composition, in which thereafter the photochromic polymerizable composition is polymerized and in which thus the polarizing film is stacked in layers.

As the polarizing film, a commercially available polarizing film can be utilized. With respect to the thickness of the polarizing film, the polarizing film having a thickness of 20 to 100 µm can be preferably used. For example, the polarizing film is formed by drawing polyvinyl alcohol which is dyed with a dichroic substance such as iodine or a dichroic dye.

As the dichroic dye included in the polarizing film, a commercially available dichroic dye can be used without any limitation. For example, dyes of azo, anthraquinone are mentioned. Specific examples include Chlorantine Fast Red (C.I. 28160), Congo Red (C.I. 22120), Brilliant Blue B (C.I. 24410), Benzopurpurin (C.I. 23500), Chlorazole Black BH (C.I. 22590), Direct Blue 2B (C.I. 22610), Diamine Green (C.I. 30295), Chrysophenine (C.I. 24895), Sirius Yellow (C.I. 29000), Direct Fast Red (C.I. 23630), Acid Black (C.I. 20470), Direct Sky Blue (C.I. 24400), Solophenyl Blue 4GL (C.I. 34200), Direct Copper Blue 2B (C.I. 24185), Nippon Brilliant Violet BKconc (C.I. 27885). The coloring agents of two or more colors can be selected from among these dichroic dyes according to the purpose so as to be used. In parentheses, Colour Index Nos. described in "New Edition Handbook of Dyes" edited by Organic Synthesis Association (Maruzen Co., Ltd., 1970) are indicated.

When the photochromic polymerizable composition described above is used, even a polarizing film in which its luminous transmittance is 10 to 60% and in which its polarization degree is 70.0 to 99.9 can be securely bonded.

In the polarizing film, in order to enhance the function and the adhesiveness thereof, cellulose triacetate films may be stacked in layers on both sides. The thickness of the cellulose triacetate film is preferably 20 to 200 pm, and more preferably 20 to 100 pm.

In order to adjust the amount of water included in the polarizing film and to provide the dimensional stability of the polarizing film, before the manufacturing of the photochromic optical article according to the present embodiment, heating processing may be performed on the polarizing film at 40 to 100°C for about 5 seconds to 30 minutes.

### EXAMPLES

Although the present invention will be described in detail below using Examples and Comparative Examples, the present invention is not limited to Examples described below. In Examples and Comparative Examples, the individual components described above, a method for evaluating the photochromic properties are as follows.

### <Photochromic compound (A)>

PC1: Compound represented by formula below. 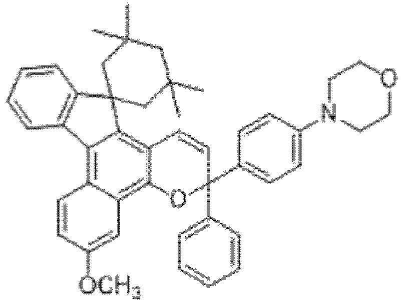
PC2: Compound represented by formula below.

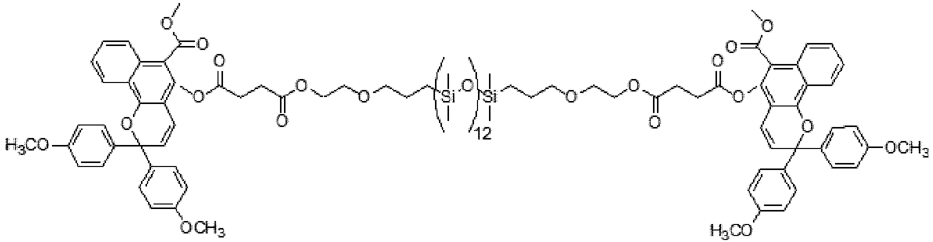

PC2 can be manufactured with reference to, for example, a manufacturing method disclosed in PCT International Publication No. WO2009/146509. Specifically, in PCT International Publication No. WO2009/146509, a naphthopyran compound having 2-hydroxy-ethoxycarbonyl group is made to react with polydimethylsiloxane having carboxy groups at both ends, and thus PC2 can be manufactured. The (average) molecular weight of a molecular chain is 1350.

### <Polyiso(thio)cyanate compound (B1)>

IPDI: isophorone diisocyanate
XDI: m-xylene diisocyanate
NBDI: norbornane diisocyanate
H12MDI: dicyclohexylmethane-4,4'-diisocyanate
HDMI: 1,6-diisothiocyanate hexane
H6XDI: 1,3-bis(isocyanatomethyl)cyclohexane (mixture of isomers)

### <Poly(thi)ol compound (B2)>

[Polyol]
   PL1: Duranol made by Asahi Kasei Chemicals Corporation (polycarbonate diol, number average molecular weight of 500)
   PL2: Duranol made by Asahi Kasei Chemicals Corporation (polycarbonate diol, number average molecular weight of 800)
   PL3: diglycerin
   PL4: UNIOX G-450 made by NOF CORPORATION (polyoxyethylene glyceryl ether, number average molecular weight of 450)
[Polythiol]
   EGMP: tetraethylene glycol bis(3-mercaptopropionate)
   TMMP: trimethylolpropane tris (3-mercaptopropionate)
   TMMB: trimethylolpropane tris (3-mercaptobutyrate)
   PolySH: 1,2-bis[(2-mercaptoethyl)thio]-3-mercaptopropane
   PEMP: pentaerythritol tetrakis (3-mercaptopropionate)
   DEMP: dipentaerythritol hexakis (3-mercaptopropionate)

### <Mono(thi)ol compound (B3)>

PGME10: polyethylene glycol monooleyl ether (n≈10, Mw=668)
SMP: stearyl-3-mercaptopropionate (Mw=359)
OMP: n-octyl-3-mercaptopropionate (Mw=218)
MBG: 3-methoxybutyl thioglycolate (Mw=178)

### <Polyrotaxane monomer (B4)>

RX-1: polyrotaxane monomer prepared in Preparation Example 1 below.

### <Polymerization hardening accelerator (C)>

[Reaction catalyst for urethane or urea]
C1: dimethyldichlorotin

### <Other mixed component>

[Stabilizer]
HP: ethylene bis(oxyethylene)bis[3-(5-tert-butyl-4-hydroxy-m-tolyl)propionate]

### <Preparation Example 1>

A method for preparing RX-1 serving as the component (B4) will be described below.

### (1-1) Preparation of PEG-COOH

As a polymer for formation of an axis molecule, a linear polyethylene glycol (PEG) having a molecular weight of 20000 was prepared. 10 g of PEG, 100 mg of TEMPO (2,2,6,6-tetramethyl-1-piperidinyloxy radical) and 1 g of sodium bromide were dissolved in 100 mL of water. 5 mL of commercially available aqueous sodium hypochlorite solution (effective chlorine concentration of 5%) was added to this solution, and the resulting solution was stirred for 10 minutes at room temperature. Thereafter, 5 mL of ethanol was added at the maximum, and thus the reaction was completed. Then, an extraction was performed with 50 mL of methylene chloride, and thereafter methylene chloride was distilled off, was dissolved in 250 mL of ethanol and was then precipitated again at a temperature of -4°C over 12 hours and PEG-COOH was recovered and dried.

### (1-2) Preparation of polyrotaxane

3 g of PEG-COOH prepared as described above and 12 g of α-cyclodextrin (α-CD) each were dissolved in 50 mL of hot water at 70°C, and the individual solutions obtained were mixed and well shaken. Then, this mixed solution was precipitated again at 4°C over 12 hours, and the precipitated inclusion complex was freeze-dried and was recovered. Thereafter, 0.13 g of adamantane amine was dissolved in 50 mL of dimethylformamide (DMF) at room temperature, then the inclusion complex described above was added and the resulting solution was rapidly well shaken. Then, a solution obtained by dissolving, in DMF, 0.38 g of a BOP reagent (benzotriazol 1-yl-oxy-tris(dimethylamino)phosphonium hexafluorophosphate) was further added and was well shaken. Furthermore, a solution obtained by dissolving, in DMF, 0.14 mL of diisopropylethylamine was added and was well shaken, and thus a slurry reagent was obtained. The slurry reagent obtained as described above was left at 4°C for 12 hours. Thereafter, 50 mL of a DMF/methanol mixed solvent (volume ratio: 1/1) was added and mixed and was centrifuged, and the supernatant was discarded. Furthermore, washing was performed with the DMF/methanol mixed solvent described above, then washing was performed with methanol, centrifuging was performed and thus a precipitate was obtained. The obtained precipitate was dried by vacuum drying and was dissolved in 50 mL of DMSO, the obtained transparent solution was dropped into 700 mL of water and thus polyrotaxane was precipitated. The precipitated polyrotaxane was recovered by centrifuging and was vacuum dried. Furthermore, the precipitated polyrotaxane was dissolved in DMSO and was precipitated in water, and was then recovered and dried, with the result that the purified polyrotaxane was obtained. The inclusion amount of α-CD here was 0.25.

Here, the polyrotaxane was dissolved in DMSO-d₆, a measurement was performed with a ¹H-NMR measuring device (JNM-LA500 made by JEOL Ltd.) and the inclusion amount was calculated by a method below. Here, X, Y and X/(Y-X) represent the following meanings.
X: Integral value of protons derived from hydroxy groups in 4 to 6 ppm of cyclodextrin
Y: Integral value of protons derived from methylene chains in
3 to 4 ppm of cyclodextrin and PEG
X/(Y-X): Proton ratio of cyclodextrin to PEG

First, theoretically, X/(Y-X) when the maximum inclusion amount was 1.0 was previously calculated, this value was compared with X/(Y-X) calculated from the analysis value of the actual compounds and thus the inclusion amount was calculated.

### (1-3) Introduction of side chain into polyrotaxane

500 mg of the polyrotaxane purified as described above was dissolved in 50 mL of a NaOH aqueous solution of 1 mol/L, 3.83 g of propylene oxide of 66 mmoles was added and the resulting solution was stirred under an argon atmosphere at room temperature for 12 hours. Then, the polyrotaxane solution described above was neutralized with an HCl aqueous solution of 1 mol/L such that the pH thereof was 7 to 8, dialysis was performed with a dialysis tube, freeze drying was performed and thus hydroxypropylated polyrotaxane was obtained. The modification degree of a cyclic molecule to a hydroxy group caused by a hydroxypropyl group was 50%. 5 g of the obtained hydroxypropylated polyrotaxane was dissolved in 30 g of ε-caprolactone at 80°C, and thus a mixture was prepared. The mixture was stirred at 110°C for one hour while dry nitrogen was being blown, thereafter 0.16 g of a 50 mass% xylene solution of tin(II) 2-ethylhexanoate was added and the resulting solution was stirred at 130°C for 6 hours. Thereafter, xylene was added, and thus a polycaprolactone modified polyrotaxane xylene solution into which a side chain whose nonvolatile concentration was about 35 mass% was introduced was obtained.

The polycaprolactone modified polyrotaxane xylene solution prepared as described above was dropped into hexane, and was recovered and dried so as to form a polymerizable functional group, with the result that a side chain modified polyrotaxane monomer having a hydroxy group was obtained. The hydroxypropylated polyrotaxane obtained was identified with ¹H-NMR and GPC, and thus the hydroxypropylated polyrotaxane having a desired structure was confirmed. In the polyrotaxane monomer, the modification degree of the side chain was 50%, the (average) molecular weight of the side chain was about 600 and the weight-average molecular weight (Mw) measured with GPC was 700000.

### <Example 1>

By the following formulation, the individual components were mixed together so as to prepare a uniform liquid (photochromic polymerizable composition). The individual mixed amounts are shown in table 1. The total number of moles of the iso(thio)cyanate group in the polyiso(thio)cyanate compound of the component (B1) is assumed to be n1, the total number of moles of the active hydrogen-containing group in the component (B2) is assumed to be n2 and the total number of moles of the active hydrogen-containing group in the component (B3) is assumed to be n3, and the ratios of the numbers of moles are shown in table 1.

### Formulation:

Photochromic compound (A): PC1 0.18 parts by mass
Polyiso(thio)cyanate compound (B1): IPDI 41 parts by mass
Poly(thi)ol compound (B2): PEMP 37 parts by mass
Poly(thi)ol compound (B2): PL2 15 parts by mass
Mono(thi)ol compound (B3): PGME10 7 parts by mass
Hardening accelerator (C): C1 0.05 parts by mass
Stabilizer: HP 1 part by mass

The photochromic polymerizable composition described above was used, and thus a photochromic optical article was manufactured by a method below. The photochromic polymerizable composition was first sufficiently defoamed and was thereafter was applied to the concave surface of a soda glass plate (optical article plate) with a thickness of 1.0 mm, 6 curves and φ 70 mm such that the thickness of the obtained adhesive layer was 0.8 mm. Then, the other soda glass plate (optical article plate) with a thickness of 1.0 mm, 6 curves and φ 70 mm was installed such that its convex surface was bonded to the photochromic polymerizable composition.

Then, they were left within an oven heated to 50°C for 30 minutes, and were then heated at 120°C for one hour, and thus the photochromic polymerizable composition was polymerized, with the result that the photochromic optical article was obtained.

On the obtained photochromic optical article, the evaluations of the maximum absorption wavelength, a color optical density, a color degradation speed, durability, a grinding test and an outdoor exposure test were performed as follows. The results of the evaluations are shown in table 3 below.

### [Evaluation items]

(1) Maximum absorption wavelength (λmax): the maximum absorption wavelength after color production which was determined with a spectrophotometer (instantaneous multichannel photo detector-MCPD1000) made by Otsuka Electronics Co., Ltd. The maximum absorption wavelength is related to color tone at the time of color production.
(2) Color optical density {ε(120)-ε(0)}: a difference at the maximum absorption wavelength between an absorbance {ε(120)} after light was applied for 120 seconds and an absorbance ε(0) before the application of light. It is said that as this value is increased, the photochromic properties are more excellent.
(3) Color degradation speed [t1/2(sec.)]: a time which was necessary such that when the application of light was stopped after light was applied for 120 seconds, the absorbance of a specimen at the maximum absorption wavelength was lowered to a half of {ε(120)-ε(0)}. It is said that as this time is decreased, the photochromic properties are more excellent.
(4) Durability (%) = [(A60days)/(A0)×100]: In order to evaluate the durability of color production when exposed to sunlight outdoors, the following accelerated degradation test was performed. Specifically, the obtained photochromic optical article was left outdoors where sufficient sunlight was applied for 60 days in a row. The evaluation of the color optical density described above was performed on the photochromic optical article before and after the test, the color optical density (A0) before the test and the color optical density (A60days) after the test were measured, the value of [(A60days)/(A0)×100] was assumed to be a residual rate (%) and the residual rate was used as an index for the durability of color production. As the residual rate is increased, the durability of color production is increased.
(5) Grinding test: The obtained photochromic optical article was continuously ground with a lens edger ECOM6 made by Takubo Machine works Co., Ltd. until φ 50 mm was achieved, and appearances were evaluated. The photochromic optical article on which lens edging was performed was visually observed from the front surface, and evaluations were performed with criteria below. For the size of peeling, the size of a part in which transparency was lost was used as an index.
   1; it was impossible to visually confirm peeling
   2; it was possible to visually confirm peeling which was less than 1 mm
   3; it was possible to visually confirm peeling which was equal to or greater than 1 mm
(6) Outdoor exposure test: The photochromic optical article on which the accelerated degradation test was performed in (4) above was visually observed from the front surface, and evaluations were performed with criteria below. For the size of peeling, the size of a part in which transparency was lost was used as an index.
   1; it was impossible to visually confirm peeling and to visually find yellowing
   2; it was possible to visually confirm peeling which was less than 0.5 mm and/or to visually find yellowing
   3; it was possible to visually confirm peeling which was equal to or greater than 0.5 mm and less than 1 mm and/or to visually find yellowing
   4; it was possible to visually confirm peeling which was equal to or greater than 1 mm and/or to visually find yellowing

### <Examples 2 to 31, Comparative Examples 1 to 2>

The photochromic optical articles were manufactured in the same method as in Example 1 except that the photochromic compositions indicated in tables 1 and 2 were used, and were evaluated. However, in Example 26, a polarizing film (thickness of 27 pm, luminous transmittance of 42.5% and polarization degree of 99.2%) which was dyed with a dichroic dye so as to have gray color was embedded in the photochromic polymerizable composition, and the photochromic optical article was manufactured. In Example 27, the photochromic polymerizable composition to which 0.02 parts by mass of a tetraazaporphyrin compound (made by Mitsui Chemicals, Inc.: Dye PD311S) was added was used, and the photochromic optical article was manufactured. In Examples 11, 12, 14 to 21, 23 to 28, 30 and 31, the total number of moles of the active hydrogen-containing group of the component (B4) was assumed to be n4, and mole ratios with respect to the other components were indicated in table 1 or 2. The results of the evaluations are shown in table 3.

**[Table 1]**

| No. | Component (A) (parts by mass) | Component (B1) (parts by mass) | Component (B2) (parts by mass) | Component (B3) (parts by mass) | Component (B4) (parts by mass) | Component (C) (parts by mass) | Stabilizer (parts by mass) | Mole ratio n1:n2:n3:(n4) |
|---|---|---|---|---|---|---|---|---|
| Example 1 | PC1 (0.18) | IPDI (41) | PEMP (37) | PGME10 (7) | - | C1 (0.05) | HP (1) | 1.05:0.97:0.03 |
| | | | PL2 (15) | | | | | |
| Example 2 | PC1 (0.29) | IPDI (41) | PEMP (37) | PGME10 (7) | - | C1 (0.05) | HP (1) | 1.05:0.97:0.03 |
| | | | PL2 (15) | | | | | |
| Example 3 | PC1 (3.5) | IPDI (41) | PEMP (37) | PGME10 (7) | - | C1 (0.05) | HP (1) | 1.05:0.97:0.03 |
| | | | PL2 (15) | | | | | |
| Example 4 | PC1 (0.48) | IPDI (41) | PEMP (37) | PGME10 (7) | - | C1 (0.05) | HP (1) | 1.05:0.97:0.03 |
| | | | PL2 (15) | | | | | |
| Example 5 | PC1 (1.44) | IPDI (41) | PEMP (37) | PGME10 (7) | - | C1 (0.05) | HP (1) | 1.05:0.97:0.03 |
| | | | PL2 (15) | | | | | |
| Example 6 | PC1 (1.44) | XDI (38) | DEMP (43) | PGME10 (9) | - | C1 (0.05) | HP (1) | 1.05:0.96:0.04 |
| | | | PL1 (10) | | | | | |
| Example 7 | PC1 (1.44) | XDI (37) | DEMP (49) | PGME10 (3) | - | C1 (0.05) | HP (1) | 0.94:0.99:0.01 |
| | | | PL1 (11) | | | | | |
| Example 8 | PC1 (1.44) | NBDI (40) | DEMP (42) | PGME10 (9) | - | C1 (0.05) | HP (1) | 1.05:0.96:0.04 |
| | | | PL1 (10) | | | | | |
| Example 9 | PC1 (1.44) | NBDI (42) | DEMP (43) | SMP (5) | - | C1 (0.05) | HP (1) | 1.05:0.96:0.04 |
| | | | PL1 (10) | | | | | |

| No. | Component (A) (parts by mass) | Component IS11 (parts by mass) | Component (B2) (parts by mass) | Component (B3) (parts by mass) | Component (B4) (parts by mass) | Component (C) (parts by mass) | Stabilizer (parts by mass) | Mole ratio n1:n2:n3:(n4) |
|---|---|---|---|---|---|---|---|---|
| Example 10 | PC1 (1.44) | NBDI (39) | DEMP (44) | SMP (5) | - | C1 (0.05) | HP (1) | 0.97:0.96:0.04 |
| | | | PL1 (11) | | | | | |
| Example 11 | PC1 (1.44) | NBDI (41) | PEMP (41) | PGME10 (4) | RX-1 (4) | C1 (0.05) | HP (1) | 1.05:0.89:0.09:(0.02) |
| | | | | SMP (10) | | | | |
| Example 12 | PC1 (1.44) | NBDI (33) | PEMP (45) | PGME10 (8) | RX-1 (4) | C1 (0.05) | HP (1) | 0.77:0.89:0.10:(0.01) |
| | | | | SMP (10) | | | | |
| Example 13 | PC1 (1.44) | IPDI (41) | PEMP (37) | PGME10 (7) | - | C1 (0.05) | HP (1) | 1.05:0.97:0.03 |
| | | | PL2 (15) | | | | | |
| Example 14 | PC1 (1.60) | H12MDI (52) | PEMP (41) | PGME10 (4) | RX-1 (4) | C1 (0.05) | HP (1) | 1.06:0.89:0.09:(0.02) |
| | | | | SMP (10) | | | | |
| Example 15 | PC1 (1.35) | HMDI (35) | PEMP (41) | PGME10 (4) | RX-1 (4) | C1 (0.05) | HP (1) | 1.11:0.89:0.09:(0.02) |
| | | | | SMP (10) | | | | |
| Example 16 | PC1 (1.60) | H12MDI (52) | TMMP (41) | PGME10 (4) | RX-1 (4) | C1 (0.05) | HP (1) | 1.14:0.89:0.10:(0.02) |
| | | | | SMP (10) | | | | |
| Example 17 | PC1 (1.47) | H6XDI (39) | TMMB (45) | PGME10 (4) | RX-1 (4) | C1 (0.05) | HP (1) | 1.16:0.88:0.10:(0.02) |
| | | | | SMP (10) | | | | |

**[Table 2]**

| NO. | Component (A) (parts by mass) | Component (B1) (parts by mass) | Component (B2) (parts by mass) | Component (B3) (parts by mass) | Component (B4) (parts by mass) | Component (C) (parts by mass) | Stabilizer (parts by mass) | Mole ratio n1:n2:n3:(n4) |
|---|---|---|---|---|---|---|---|---|
| Example 18 | PC1 (1.25) | H6XDI (39) | PolySH (30) | PGME10 (4) | RX-1 (4) | C1 (0.05) | HP (1) | 1.04:0.90:0.09:(0.02) |
| | | | | SMP (10) | | | | |
| Example 19 | PC1 (1.67) | H6XDI (38) | EGMP (60) | PGME10 (4) | RX-1 (4) | C1 (0.05) | HP (1) | 1.08:0.92:0.06:(0.01) |
| | | | | SMP (10) | | | | |
| Example 20 | PC1 (1.15) | H6XDI (39) | PolySH (30) | MBG (7) | RX-1 (4) | C1 (0.05) | HP (1) | 1.03:0.88:0.10:(0.02) |
| Example 21 | PC1 (1-14) | H6XDI (38) | PolySH (30) | OMP (7) | RX-1 (4) | C1 (0.05) | HP (1) | 1.02:0.90:0.08:(0.02) |
| Example 22 | PC1 (1.57) | IPDI (50) | PEMP (37) | PGME10 (7) | - | C1 (0.05) | HP (1) | 1.31:0.97:0.03 |
| | | | PL2 (15) | | | | | |
| Example 23 | PC1 (1.68) | H12MDI (52) | PEMP (41) | PGME10 (4) | RX-1 (10) | C1 (0.05) | HP (1) | 1.03:0.87:0.09:(0.04) |
| | | | | SMP (10) | | | | |
| Example 24 | PC1 (1.56) | H12MDI (52) | PEMP (41) | PGME10 (4) | RX-1 (1.5) | C1 (0.05) | HP (1) | 1.07:0.90:0.09:(0.01) |
| | | | | SMP (10) | | | | |
| Example 25 | PC2 (2.08) | NBDI (41) | PEMP (41) | PGME10 (4) | RX-1 (4) | C1 (0.05) | HP (1) | 1.06: 0.89: 0.09:(0.02) |
| | | | | SMP (10) | | | | |

| No. | Component (A) (parts by mass) | Component (B1) (parts by mass) | Component (B2) (parts by mass) | Component (B3) (parts by mass) | Component (B4) (parts by mass) | Component (C) (parts by mass) | Stabilizer (parts by mass) | Mole ratio n1:n2:n3:(n4) |
|---|---|---|---|---|---|---|---|---|
| Example 26 | PC1 (0.20) | H12MDI (52) | PEMP (41) | PGME10 (4) | RX-1 (4) | C1 (0.05) | HP (1) | 1.06:0.89:0.09:(0.02) |
| | | | | SMP (10) | | | | |
| Example 27 | PC1 (1.60) | H12MDI (52) | PEMP (41) | PGME10 (4) | RX-1 (4) | C1 (0.05) | HP (1) | 1.06:0.89:0.09:(0.02) |
| | | | | SMP (10) | | | | |
| Example 28 | PC1 (1.41) | H6XDI (39) | PEMP (41) | PGME10 (4) | RX-1 (4) | C1 (0.05) | HP (1) | 1.07:0.89:0.09:(0.02) |
| | | | | SMP (10) | | | | |
| Example 29 | PC1 (1.37) | H6XDI (36) | PEMP (37) | PGME10 (7) | - | C1 (0.05) | HP (1) | 1.01:0.97:0.03 |
| | | | PL2 (15) | | | | | |
| Example 30 | PC1 (1.20) | H6XDI (39) | PL3 (7) | PGME10 (4) | RX-1 (4) | C1 (0.05) | HP (1) | 1.07:0.89:0.09:(0.02) |
| | | | PL4 (19) | SMP (10) | | | | |
| Example 31 | PC1 (1.37) | H6XDI (39) | PL4 (38) | PGME10 (4) | RX-1 (4) | C1 (0.05) | HP (1) | 1.06:0.89:0.09:(0.02) |
| | | | | SMP (10) | | | | |
| Comparative Example 1 | PC1 (1.44) | IPDI (43) | PEMP (41) | - | - | C1 (0.05) | HP (1) | 1.05:1.00:0.00 |
| | | | PL2 (16) | | | | | |
| Comparative Example 2 | PC1 (0.13) | IPDI (43) | PEMP (41) | - | - | C1 (0.05) | HP (1) | 1.05:1.00:0.00 |
| | | | PL2 (16) | | | | | |

**[Table 3]**

| No. | Soda glass plate thickness (mm) | Adhesive layer thickness (mm) | Maximum absorption wavelength (λmax) | Color optical density | Color degradation speed (seconds) | Durability (%) | Grinding test | Outdoor exposure test |
|---|---|---|---|---|---|---|---|---|
| Example 1 | 1.0/1.0 | 0.8 | 595 | 0.65 | 70 | 80 | 1 | 3 |
| Example 2 | 1.0/1.0 | 0.5 | 595 | 0.67 | 70 | 90 | 1 | 2 |
| Example 3 | 1.0/1.0 | 0.04 | 595 | 0.66 | 70 | 90 | 1 | 3 |
| Example 4 | 1.0/1.0 | 0.3 | 595 | 0.67 | 70 | 90 | 1 | 2 |
| Example 5 | 1.0/1.0 | 0.1 | 595 | 0.67 | 70 | 90 | 1 | 1 |
| Example 6 | 1.0/1.0 | 0.1 | 595 | 0.62 | 75 | 90 | 1 | 1 |
| Example 7 | 1.0/1.0 | 0.1 | 595 | 0.6 | 80 | 70 | 2 | 2 |
| Example 8 | 1.0/1.0 | 0.1 | 595 | 0.65 | 65 | 90 | 1 | 1 |
| Example 9 | 1.0/1.0 | 0.1 | 595 | 0.67 | 70 | 90 | 1 | 1 |
| Example 10 | 1.0/1.0 | 0.1 | 595 | 0.73 | 60 | 70 | 2 | 2 |
| Example 11 | 1.0/1.0 | 0.1 | 595 | 0.95 | 51 | 90 | 1 | 1 |
| Example 12 | 1.0/1.0 | 0.1 | 595 | 0.95 | 47 | 70 | 1 | 3 |
| Example 13 | 1.0/3.0 | 0.1 | 595 | 0.67 | 70 | 90 | 1 | 1 |
| Example 14 | 1.0/1.0 | 0.1 | 595 | 0.87 | 65 | 90 | 1 | 1 |
| Example 15 | 1.0/1.0 | 0.1 | 595 | 0.95 | 45 | 90 | 1 | 1 |
| Example 16 | 1.0/1.0 | 0.1 | 595 | 0.85 | 64 | 80 | 1 | 2 |
| Example 17 | 1.0/1.0 | 0.1 | 595 | 0.95 | 48 | 80 | 1 | 2 |
| Example 18 | 1.0/1.0 | 0.1 | 595 | 0.95 | 48 | 80 | 1 | 2 |

| No. | Soda glass plate thickness (mm) | Adhesive layer thickness (mm) | Maximum absorption wavelength (λmax) | Color optical density | Color degradation speed (seconds) | Durability (%) | Grinding test | Outdoor exposure test |
|---|---|---|---|---|---|---|---|---|
| Example 19 | 1.0/1.0 | 0.1 | 595 | 0.97 | 40 | 70 | 2 | 2 |
| Example 20 | 1.0/1.0 | 0.1 | 595 | 0.75 | 68 | 90 | 1 | 2 |
| Example 21 | 1.0/1.0 | 0.1 | 595 | 0.77 | 63 | 90 | 1 | 2 |
| Example 22 | 1.0/1.0 | 0.1 | 595 | 0.75 | 65 | 70 | 2 | 3 |
| Example 23 | 1.0/1.0 | 0.1 | 595 | 0.95 | 50 | 90 | 1 | 3 |
| Example 24 | 1.0/1.0 | 0.1 | 595 | 0.72 | 70 | 90 | 1 | 3 |
| Example 25 | 1.0/1.0 | 0.1 | 498 | 0.97 | 40 | 90 | 1 | 1 |
| Example 26 | 1.0/1.0 | 0.8 | 595 | 1.02 | 65 | 90 | 1 | 2 |
| Example 27 | 1.0/1.0 | 0.1 | 595 | 0.87 | 65 | 90 | 1 | 1 |
| Example 28 | 1.0/1.0 | 0.1 | 595 | 0.95 | 52 | 90 | 1 | 1 |
| Example 29 | 1.0/1.0 | 0.1 | 595 | 0.68 | 65 | 90 | 1 | 1 |
| Example 30 | 1.0/1.0 | 0.1 | 595 | 0.91 | 55 | 90 | 1 | 1 |
| Example 31 | 1.0/1.0 | 0.1 | 595 | 0.96 | 50 | 90 | 1 | 1 |
| Comparative Example 1 | 1.0/1.0 | 0.1 | 595 | 0.42 | 95 | 80 | 2 | 4 |
| Comparative Example 2 | 1.0/1.0 | 1.1 | 595 | 0.42 | 95 | 80 | 3 | 4 |

As is cear from table 3, the photochronic optical articles of Examples 1 to 31 had excellent photochromic properties and were also excellent in the adhesion and the weather resistance. On the other hand, the photochromic optical articles of Comparative Examples 1 and 2 were insufficient in any of the photochromic properties, the adhesion and the weather resistance.

### EXPLANATION OF REFERENCE NUMERALS

1: photochromic optical article
2: optical article plate
3: adhesive layer
4: optical article plate
10: polyrotaxane monomer
20: axis molecule
30: cyclic molecule
40: bulky end group
50: side chain

## Claims

1. A photochromic optical article which is formed by bonding together a pair of optical article plates each comprising a glass material with an adhesive layer that includes a photochromic compound (A) and a urethane resin (B),
wherein the urethane resin (B) is a resin obtained by polymerizing:
a polyiso(thio)cyanate compound (B1) having two or more iso(thio)cyanate groups within a molecule;
a poly(thi)ol compound (B2) having, within a molecule, two or more active hydrogen-containing groups selected from a hydroxy group and a thiol group; and
a mono(thi)ol compound (B3) having, within a molecule, one active hydrogen-containing group selected from a hydroxy group and a thiol group.

2. The photochromic optical article according to claim 1, wherein a thickness of the adhesive layer is equal to or less than 0.8 mm.

3. The photochromic optical article according to claim 1 or 2, wherein the urethane resin (B) is a resin obtained by further polymerizing: a polyrotaxane monomer (B4) which has a complex molecular structure formed with an axis molecule and a plurality of cyclic molecules including the axis molecule and in which the cyclic molecule has an iso(thio)cyanate group or an active hydrogen-containing group selected from a hydroxy group and a thiol group.

4. The photochromic optical article according to claim 3, wherein the cyclic molecule of the polyrotaxane monomer (B4) has a side chain that is formed with repeating units of an organic group having 3 to 20 carbon atoms, and an end of at least part of the side chain is the active hydrogen-containing group.

5. The photochromic optical article according to any one of claims 1 to 4, wherein the optical article plates are formed of an inorganic material comprising glass material.

6. The photochromic optical article according to any one of claims 1 to 5, wherein a thickness of at least one of the optical article plates is equal to or less than 1.5 mm.

7. The photochromic optical article according to any one of claims 1 to 6, wherein the mono(thi)ol compound (B3) comprises at least one compound selected from the group consisting of polyoxypropylene monoalkyl ether, polyoxyethylene polyoxypropylene monoalkyl ether, polyethylene glycol monooleyl ether, polyethylene glycol monolaurate, polyethylene glycol monostearate, polyethylene glycol mono-4-octyl phenyl ether, polyethylene glycol monomethyl ether, polyoxyethylene lauryl ether, polyoxyethylene-2-ethylhexyl ether, polyoxyethylene tridecyl ether, polyoxyethylene cetyl ether, polyoxyethylene stearyl ether, 3-methoxybutyl thioglycolate, 2-ethylhexyl thioglycolate, 2-mercaptoethyl octanoic acid ester, 3-mercaptopropionic acid-3-methoxybutyl, 3-mercaptopropionate ethyl, 3-mercaptopropionic acid-2-octyl, n-octyl-3-mercaptopropionate, methyl-3-mercaptopropionate, tridecyl-3-mercaptopropionate, stearyl-3-mercaptopropionate, and linear or branched saturated or unsaturated alkyl thiols having 5 to 30 carbon atoms.

8. The photochromic optical article according to any one of claims 1 to 7, wherein the urethane resin (B) is a resin obtained by polymerizing polyiso(thio)cyanate compound (B1), the poly(thi)ol compound (B2), and the mono(thi)ol compound (B3) and wherein the amount of the component (B3) is preferably 2 to 40 parts by mass with respect to the total amount of the polyiso(thio)cyanate compound (B1), the poly(thi)ol compound (B2), and the mono(thi)ol compound (B3) that is defined as 100 parts by mass.

9. The photochromic optical article according to any one of claims 1 to 9, wherein when the total number of moles of the active hydrogen-containing group in the component (B2) is assumed to be n2 and the total number of moles of the active hydrogen-containing group in the component (B3) is assumed to be n3, n2:n3 = 3 to 50:1.

10. The photochromic optical article according to any one of claims 1 to 9, wherein when the total number of moles of the iso(thio)cyanate group in the component (B1) is assumed to be n1, the total number of moles of the active hydrogen-containing group in the component (B2) is assumed to be n2, and the total number of moles of the active hydrogen-containing group in the component (B3) is assumed to be n3, n1:(n2+n3) = 0.9 to 1.5:1.

11. A method for manufacturing the photochromic optical article according to claim 1, the method comprising:
applying a photochromic polymerizable composition on an optical article plate comprising a glass material, wherein the photochromic polymerizable composition containing:
the photochromic compound (A);
the polyiso(thio)cyanate compound (B1) having two or more iso(thio)cyanate groups within the molecule;
the poly(thi)ol compound (B2) having, within the molecule, two or more active hydrogen-containing groups selected from a hydroxy group and a thiol group; and
the mono(thi)ol compound (B3) having, within the molecule, one active hydrogen-containing group selected from a hydroxy group and a thiol group,
overlaying the other optical article plate on the photochromic polymerizable composition, and
polymerizing the photochromic polymerizable composition.

## Patentansprüche

1. Photochromer optischer Artikel, der durch Zusammenkleben eines Paars von Platten des optischen Artikels gebildet ist, die jeweils ein Glasmaterial mit einer Klebstoffschicht umfassen, die eine photochrome Verbindung (A) und ein Urethanharz (B) aufweist,
wobei das Urethanharz (B) ein Harz ist, das durch Polymerisation von Folgendem gewonnen ist:
einer Polyiso(thio)cyanatverbindung (B1) mit zwei oder mehr Iso(thio)cyanatgruppen innerhalb eines Moleküls;
einer Poly(thi)olverbindung (B2), die in einem Molekül zwei oder mehr aktive wasserstoffhaltige Gruppen aufweist, welche aus einer Hydroxygruppe und einer Thiolgruppe ausgewählt sind; und
einer Mono(thi)olverbindung (B3), die in einem Molekül eine aktive wasserstoffhaltige Gruppe aufweist, welche aus einer Hydroxygruppe und einer Thiolgruppe ausgewählt ist.

2. Photochromer optischer Artikel nach Anspruch 1, wobei eine Dicke der Klebstoffschicht gleich oder kleiner als 0,8 mm ist.

3. Photochromer optischer Artikel nach Anspruch 1 oder 2, wobei das Urethanharz (B) ein Harz ist, das durch weiteres Polymerisation von Folgendem gewonnen ist: ein Polyrotaxan-Monomer (B4), das eine komplexe Molekülstruktur aufweist, die mit einem Achsenmolekül und einer Mehrzahl von zyklischen Molekülen, die das Achsenmolekül einschließen, gebildet ist und in dem das zyklische Molekül eine Iso(thio)cyanatgruppe oder eine aktive wasserstoffhaltige Gruppe, ausgewählt aus einer Hydroxygruppe und einer Thiolgruppe, aufweist.

4. Photochromer optischer Artikel nach Anspruch 3, wobei das zyklische Molekül des Polyrotaxan-Monomers (B4) eine Seitenkette aufweist, die aus sich wiederholenden Einheiten einer organischen Gruppe mit 3 bis 20 Kohlenstoffatomen gebildet ist, und ein Ende von mindestens einem Teil der Seitenkette die aktive wasserstoffhaltige Gruppe ist.

5. Photochromer optischer Artikel nach einem der Ansprüche 1 bis 4, wobei die Platten des optischen Artikels aus einem anorganischen Material gebildet sind, das Glasmaterial umfasst.

6. Photochromer optischer Artikel nach einem der Ansprüche 1 bis 5, wobei eine Dicke mindestens einer der Platten des optischen Artikels gleich oder kleiner als 1,5 mm ist.

7. Photochromer optischer Artikel nach einem der Ansprüche 1 bis 6, wobei die Mono(thi)olverbindung (B3) mindestens eine Verbindung umfasst, die ausgewählt ist aus der Gruppe bestehend aus Polyoxypropylenmonoalkylether, Polyoxyethylenpolyoxypropylenmonoalkylether, Polyethylenglykolmonooleylether, Polyethylenglykolmonolaurat, Polyethylenglykolmonostearat, Polyethylenglykolmono-4-octylphenylether, Polyethylenglykolmonomethylether, Polyoxyethylenlaurylether, Polyoxyethylen-2-ethylhexylether, Polyoxyethylentridecylether, Polyoxyethylencetylether, Polyoxyethylenstearylether, 3-Methoxybutylthioglykolat, 2-Ethylhexylthioglykolat, 2-Mercaptoethyloctansäureester, 3-Mercaptopropionsäure-3-methoxybutyl, 3-Mercaptopropionatethyl, 3-Mercaptopropionsäure-2-octyl, n-Octyl-3-mercaptopropionat, Methyl-3-mercaptopropionat, Tridecyl-3-mercaptopropionat, Stearyl-3-mercaptopropionat und linearen oder verzweigten gesättigten oder ungesättigten Alkylthiolen mit 5 bis 30 Kohlenstoffatomen.

8. Photochromer optischer Artikel nach einem der Ansprüche 1 bis 7, wobei das Urethanharz (B) ein Harz ist, das durch Polymerisation von Polyiso(thio)cyanatverbindung (B1), der Poly(thi)olverbindung (B2) und der Mono(thi)olverbindung (B3) gewonnen ist, und wobei die Menge der Komponente (B3) vorzugsweise 2 bis 40 Masseteile in Bezug auf die Gesamtmenge der Polyiso(thio)cyanatverbindung (B1), der Poly(thi)olverbindung (B2) und der Mono(thi)olverbindung (B3) beträgt, die als 100 Masseteile definiert ist.

9. Photochromer optischer Artikel nach einem der Ansprüche 1 bis 9, wobei, wenn die Gesamtmolzahl der aktiven wasserstoffhaltigen Gruppe in der Komponente (B2) als n2 angenommen wird und die Gesamtmolzahl der aktiven wasserstoffhaltigen Gruppe in der Komponente (B3) als n3 angenommen wird, n2:n3 = 3 bis 50:1 ist.

10. Photochromer optischer Artikel nach einem der Ansprüche 1 bis 9, wobei, wenn die Gesamtmolzahl der Iso(thio)cyanatgruppe in der Komponente (B1) als n1 angenommen wird, die Gesamtmolzahl der aktiven wasserstoffhaltigen Gruppe in der Komponente (B2) als n2 angenommen wird und die Gesamtmolzahl der aktiven wasserstoffhaltigen Gruppe in der Komponente (B3) als n3 angenommen wird, n1:(n2+n3) = 0,9 bis 1,5:1 ist.

11. Verfahren zur Herstellung des photochromen optischen Artikels nach Anspruch 1, wobei das Verfahren umfasst:
Aufbringen einer photochromen polymerisierbaren Zusammensetzung auf eine Platte des optischen Artikels, die ein Glasmaterial umfasst, wobei die photochrome polymerisierbare Zusammensetzung Folgendes aufweist:
die photochrome Verbindung (A);
die Polyiso(thio)cyanatverbindung (B1) mit zwei oder mehr Iso(thio)cyanatgruppen im Molekül;
die Poly(thi)olverbindung (B2) mit zwei oder mehr aktiven wasserstoffhaltigen Gruppen im Molekül, die aus einer Hydroxygruppe und einer Thiolgruppe ausgewählt sind; und
die Mono(thi)olverbindung (B3) mit einer aktiven wasserstoffhaltigen Gruppe im Molekül, die aus einer Hydroxygruppe und einer Thiolgruppe ausgewählt ist,
Auflegen der anderen Platte des optischen Artikels auf die photochrome polymerisierbare Zusammensetzung und
Polymerisation der photochromen polymerisierbaren Zusammensetzung.

## Revendications

1. Article optique photochromique formé par le collage d'une paire de plaques d'article optique comprenant chacune un matériau en verre avec une couche adhésive comprenant un composé photochromique (A) et une résine uréthane (B),
dans lequel la résine uréthane (B) est une résine obtenue par polymérisation :
d'un composé polyiso(thio)cyanate (B1) comportant deux groupes iso(thio)cyanate ou plus à l'intérieur d'une molécule ;
d'un composé poly(thi)ol (B2) ayant, dans une molécule, deux ou plusieurs groupes actifs contenant de l'hydrogène choisis parmi un groupe hydroxy et un groupe thiol ; et
d'un composé mono(thi)ol (B3) ayant, dans une molécule, un groupe actif contenant de l'hydrogène choisi parmi un groupe hydroxy et un groupe thiol.

2. Article optique photochromique selon la revendication 1, dans lequel l'épaisseur de la couche adhésive est égale ou inférieure à 0,8 mm.

3. Article optique photochromique selon la revendication 1 ou 2, dans lequel la résine uréthane (B) est une résine obtenue par polymérisation supplémentaire : d'un monomère polyrotaxane (B4) qui a une structure moléculaire complexe formée d'une molécule d'axe et d'une pluralité de molécules cycliques comprenant la molécule d'axe et dans laquelle la molécule cyclique a un groupe iso(thio)cyanate ou un groupe actif contenant de l'hydrogène choisi parmi un groupe hydroxy et un groupe thiol.

4. Article optique photochromique selon la revendication 3, dans lequel la molécule cyclique du monomère polyrotaxane (B4) a une chaîne latérale formée d'unités répétitives d'un groupe organique ayant de 3 à 20 atomes de carbone, et une extrémité d'au moins une partie de la chaîne latérale est le groupe actif contenant de l'hydrogène.

5. Article optique photochromique selon l'une des revendications 1 à 4, dans lequel les plaques de l'article optique sont formées d'un matériau inorganique comprenant un matériau en verre.

6. Article optique photochromique selon l'une des revendications 1 à 5, dans lequel l'épaisseur d'au moins une des plaques de l'article optique est égale ou inférieure à 1,5 mm.

7. Article optique photochromique selon l'une quelconque des revendications 1 à 6, dans lequel le composé mono(thi)ol (B3) comprend au moins un composé choisi dans le groupe constitué par l'éther monoalkylique de polyoxypropylène, l'éther monoalkylique de polyoxyéthylène, l'éther monooléique de polyéthylène glycol, le monolaurate de polyéthylène glycol, le monostéarate de polyéthylène glycol, l'éther phénylique de polyéthylène glycol mono4-octyle, l'éther monométhylique de polyéthylène glycol, éther laurique de polyoxyéthylène, l'éther de polyoxyéthylène-2-éthylhexyle, l'éther de polyoxyéthylène tridécyl, l'éther de polyoxyéthylène cétyl, l'éther de polyoxyéthylène stéaryl, le 3-méthoxybutyl thioglycolate, le 2-éthylhexyl thioglycolate, l'ester d'acide 2-mercaptoethyl octanoïque, l'acide 3-mercaptopropionic-3-méthoxybutyl, l'éthyl 3-mercaptopropionate, l'acide 3-mercaptopropionique-2-octyle, le n- octyl-3-mercaptopropionate, le méthyl-3-mercaptopropionate, le tridécyl-3-mercaptopropionate, le stéaryl-3-mercaptopropionate, et les thiols d'alkyle saturés ou insaturés, linéaires ou ramifiés, ayant de 5 à 30 atomes de carbone.

8. Article optique photochromique selon l'une quelconque des revendications 1 à 7, dans lequel la résine uréthane (B) est une résine obtenue par polymérisation du composé polyiso(thio)cyanate (BI), du composé poly(thi)ol (B2), et du composé mono(thi)ol (B3) et dans lequel la quantité du composant (B3) est de préférence de 2 à 40 parties en masse par rapport à la quantité totale du composé polyiso(thio)cyanate (BI), du composé poly(thi)ol (B2) et du composé mono(thi)ol (B3) qui est définie comme 100 parties en masse.

9. Article optique photochromique selon l'une quelconque des revendications 1 à 9, dans lequel, lorsque le nombre total de moles du groupe contenant de l'hydrogène actif dans le composant (B2) est supposé être n2 et que le nombre total de moles du groupe contenant de l'hydrogène actif dans le composant (B3) est supposé être n3, n2:n3 = 3 à 50:1.

10. Article optique photochromique selon l'une quelconque des revendications 1 à 9, dans lequel, lorsque le nombre total de moles du groupe iso(thio)cyanate dans le composant (B1) est supposé être n1, le nombre total de moles du groupe contenant de l'hydrogène actif dans le composant (B2) est supposé être n2, et le nombre total de moles du groupe contenant de l'hydrogène actif dans le composant (B3) est supposé être n3, n1 :(n2+n3) = 0,9 à 1,5:1.

11. Procédé de fabrication d'un article optique photochromique selon la revendication 1, le procédé comprenant :
appliquer une composition polymérisable photochromique sur une plaque d'article optique comprenant un matériau en verre, la composition polymérisable photochromique contenant :
le composé photochromique (A) ;
le composé polyiso(thio)cyanate (B1) ayant deux groupes iso(thio)cyanate ou plus dans la molécule ;
le composé poly(thi)ol (B2) ayant, dans la molécule, deux ou plusieurs groupes actifs contenant de l'hydrogène choisis parmi un groupe hydroxy et un groupe thiol ; et
le composé mono(thi)ol (B3) ayant, dans la molécule, un groupe actif contenant de l'hydrogène choisi parmi un groupe hydroxy et un groupe thiol,
superposer l'autre plaque d'article optique sur la composition polymérisable photochromique, et
polymériser la composition polymérisable photochromique.
